(19) Europäisches Patentamt / European Patent Office / Office européen des brevets

(11) **EP 4 411 917 A1**

(12) **EUROPEAN PATENT APPLICATION**
published in accordance with Art. 153(4) EPC

(43) Date of publication:
**07.08.2024 Bulletin 2024/32**

(21) Application number: **22947388.9**

(22) Date of filing: **24.06.2022**

(51) International Patent Classification (IPC):
**H01M 10/052** $^{(2010.01)}$

(52) Cooperative Patent Classification (CPC):
**H01M 10/052; Y02E 60/10**

(86) International application number:
**PCT/CN2022/101117**

(87) International publication number:
**WO 2023/245619 (28.12.2023 Gazette 2023/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **WU, Zeli**
**Ningde, Fujian 352100 (CN)**
• **HAN, Changlong**
**Ningde, Fujian 352100 (CN)**
• **GUO, Jie**
**Ningde, Fujian 352100 (CN)**
• **CHEN, Huiling**
**Ningde, Fujian 352100 (CN)**
• **HUANG, Lei**
**Ningde, Fujian 352100 (CN)**

(74) Representative: **Gong, Jinping**
**CocreateIP**
**Neumarkterstr. 21**
**81673 München (DE)**

(54) **SECONDARY BATTERY, METHOD FOR PREPARING SECONDARY BATTERY, BATTERY MODULE, BATTERY PACK, AND ELECTRICAL DEVICE**

(57) The present application provides a secondary battery, a preparation method therefor, a battery module, a battery pack, and a power consuming device. The secondary battery comprises an electrolyte solution and a positive electrode plate, wherein the positive electrode plate comprises a layered material with a molecular formula of $Li_aNi_bCo_cM1_dM2_eO_fA_g$, wherein $0.8 \leq a \leq 1.2$, $0 < b < 0.98$, $0 \leq c < 0.1$, $0 < d < 0.5$, $0 \leq e \leq 0.5$, $0 \leq f \leq 2$, $0 \leq g \leq 2$, $b + c + d + e = 1$, and $f + g = 2$; and the electrolyte solution comprises lithium tetrafluoroborate, and the mass percentage content of lithium tetrafluoroborate in the electrolyte solution is x%, based on the total mass of the electrolyte solution, and the secondary battery satisfies: $x > 0$ and $0.05 \leq c + x/10 \leq 0.15$. The present application can stabilize the crystal structure of the low-cobalt or cobalt-free positive electrode active material and increase the diffusion rate of the lithium ions therein.

5

*FIG. 1*

EP 4 411 917 A1

**Description**

Technical Field

The present application belongs to the technical field of batteries, and in particular relates to a secondary battery, a preparation method therefor, a battery module, a battery pack and a power consuming device.

Background Art

The secondary battery is charged and discharged relying on the fact that the lithium ions are intercalated and deintercalated back and forth between the positive electrode and the negative electrode, and the secondary battery has the outstanding characteristics of high energy density, long cycle life, no pollution and no memory effect. Therefore, as a clean energy source, the secondary battery has gradually spread from electronic products to energy storage power systems such as hydroelectric, thermal, wind and solar power plants, as well as electric tools, electric bicycles, electric motorcycles, electric vehicles, military equipment, aerospace and other fields. Cobalt is an important element consisting of the positive electrode active material of the secondary battery. However, the content of cobalt in the crust of earth is small and it is difficult to mine and expensive. Therefore, the positive electrode active material with a low content of or free of cobalt has become an inevitable development trend. However, cobalt has a great influence on the diffusion rate of the lithium ions in the positive electrode active material. A low content of cobalt or free of cobalt will reduce the diffusion rate of the lithium ions in the positive electrode active material, and then affect the cycle life of the secondary battery.

Summary of the Invention

The object of the present application is to provide a secondary battery, a preparation method therefor, a battery module, a battery pack and a power consuming device, aiming at stabilizing the crystal structure of the low-cobalt or cobalt-free positive electrode active material and increasing the diffusion rate of the lithium ions therein.

A first aspect of the present application provides a secondary battery comprising an electrolyte solution and a positive electrode plate, wherein the positive electrode plate comprises a positive electrode current collector and a positive electrode film layer located on the surface of the positive electrode current collector, and the positive electrode film layer comprises a layered material with a molecular formula of $Li_aNi_bCo_cM1_dM2_eO_fA_g$, wherein M1 is selected from Mn, Al or a combination thereof, M2 is selected from one or more of Si, Ti, Mo, V, Ge, Se, Zr, Nb, Ru, Pd, Sb, Ce, Te and W, A is selected from one or more of F, N, P and S, $0.8 \leq a \leq 1.2$, $0 < b < 0.98$, $0 \leq c < 0.1$, $0 < d < 0.5$, $0 \leq e \leq 0.5$, $0 \leq f \leq 2$, $0 \leq g \leq 2$, $b + c + d + e = 1$, and $f + g = 2$; and the electrolyte solution comprises lithium tetrafluoroborate, and the mass percentage content of lithium tetrafluoroborate in the electrolyte solution is x%, based on the total mass of the electrolyte solution, and the secondary battery satisfies: $x > 0$ and $0.05 \leq c + x/10 \leq 0.15$.

The inventors of the present application unexpectedly found during the research process that when the electrolyte solution contains lithium tetrafluoroborate and the mass percentage content x% of lithium tetrafluoroborate and the content c of the cobalt element in the low-cobalt or cobalt-free positive electrode active material satisfy $x > 0$ and $0.05 \leq c + x/10 \leq 0.15$, the crystal structure of the low-cobalt or cobalt-free positive electrode active material can be stabilized and the diffusion rate of the lithium ions therein can be increased, thereby enabling the secondary battery to have significantly improved cycling performance. In addition, the secondary battery of the present application may also have good storage performance and dynamic performance.

In any embodiment of the present application, $0.05 \leq c + x/10 \leq 0.12$.

In any embodiment of the present application, $0 < x \leq 1.0$.

In any embodiment of the present application, the positive electrode plate has a compacted density of P g/cm$^3$, and the secondary battery satisfies: $25 \leq P/(c + x/10) \leq 65$, optionally $30 \leq P/(c + x/10) \leq 50$. Therefore, the secondary battery may further have improved power performance in addition to improved cycling performance and high energy density.

In any embodiment of the present application, the compacted density P g/cm$^3$ of the positive electrode plate satisfies that P is 3.3 to 3.6. Thus, it is beneficial for the secondary battery to have a high energy density.

In any embodiment of the present application, the electrolyte solution further comprises one or more of fluoroethylene carbonate, a lithium fluorosulfonimide salt and a lithium fluorosulfonate salt, wherein the mass percentage content of the fluoroethylene carbonate in the electrolyte solution is y1%, the mass percentage content of the lithium fluorosulfonimide salt in the electrolyte solution is y2%, and the mass percentage content of the lithium fluorosulfonate salt in the electrolyte solution is y3%, all based on the total mass of the electrolyte solution, and the electrolyte solution satisfies: $y1 \geq 0$, $y2 \geq 0$, $y3 \geq 0$, and $0 < y1 + y2 + y3 \leq 15$. Thus, it is beneficial to form a more stable interfacial film on the positive electrode and/or the negative electrode, thereby further improving the electrochemical performance of the secondary battery.

In any embodiment of the present application, the lithium fluorosulfonimide salt has a molecular formula of $LiN(SO_2R_1)(SO_2R_2)$, wherein $R_1$ and $R_2$ each independently represent For $C_nF_{2n+1}$, and n is an integer of 1-10, and optionally, the lithium fluorosulfonimide salt includes lithium difluorosulfoimide, lithium bistrifluoromethanesulfonimide or a combination thereof.

In any embodiment of the present application, the lithium fluorosulfonate salt has a molecular formula of $LiSO_3R_3$, wherein $R_3$ represents F, or a partially or fully fluorinated C1-C10 alkyl, and optionally lithium fluorosulfonate includes lithium fluorosulfonate, lithium trifluoromethanesulfonate or a combination thereof.

In any embodiment of the present application, the mass percentage content y1% of the fluoroethylene carbonate in the electrolyte solution satisfies $0 < y1 \leq 2.5$, optionally $0 < y1 \leq 2.0$. Thus, the interfacial film on the negative electrode can be stabilized and the cycling performance of the secondary battery can be effectively improved.

In any embodiment of the present application, the mass percentage content y1% of the fluoroethylene carbonate in the electrolyte solution satisfies $0.5 \leq y1/x \leq 4.0$, optionally $0.5 \leq y1/x \leq 2.0$. Thus, the synergistic effect of lithium tetrafluoroborate and fluoroethylene carbonate can be fully exhibited.

In any embodiment of the present application, the mass percentage content y1% of the fluoroethylene carbonate in the electrolyte solution satisfies $0 < y1 \leq 2.5$ and $.5 \leq y1/x \leq 4.0$.

In any embodiment of the present application, the mass percentage content y2% of the lithium fluorosulfonimide salt in the electrolyte solution satisfies $0 < y2 \leq 14$. Thus, the rate performance and low-temperature performance of the secondary battery can be significantly improved.

In any embodiment of the present application, the mass percentage content y2% of the lithium fluorosulfonimide salt in the electrolyte solution satisfies $1 \leq y2/x \leq 28$. Thus, the synergistic effect of the lithium tetrafluoroborate salt and the lithium fluorosulfonimide salt can be fully exhibited.

In any embodiment of the present application, the mass percentage content y2% of the lithium fluorosulfonimide salt in the electrolyte solution satisfies $0 < y2 \leq 14$ and $1 \leq y2/x \leq 28$.

In any embodiment of the present application when $0 < b \leq 0.7$, the mass percentage content y2% of the lithium fluorosulfonimide salt in the electrolyte solution satisfies $0 < y2 \leq 5$ and/or $1 \leq y2/x \leq 10$; optionally $0 < y2 \leq 2.5$; optionally $1 \leq y2/x \leq 5$.

In any embodiment of the present application when $0.7 \leq b < 0.98$, the mass percentage content y2% of the lithium fluorosulfonimide salt in the electrolyte solution satisfies $5 \leq y2 \leq 14$ and/or $10 \leq y2/x \leq 28$; optionally $8 \leq y2 \leq 14$; optionally $16 \leq y2/x \leq 28$.

In any embodiment of the present application, the mass percentage content y3% of the lithium fluorosulfonate salt in the electrolyte solution satisfies $0 < y3 \leq 1.0$, optionally $0 < y3 \leq 0.5$. Thus, the high-temperature performance of the secondary battery can be greatly improved.

In any embodiment of the present application, the mass percentage content y3% of the lithium fluorosulfonate salt in the electrolyte solution satisfies $0.001 \leq y3/x \leq 2.0$, optionally $0.001 \leq y3/x \leq 1.0$. Thus, the synergistic effect of the lithium tetrafluoroborate salt and the lithium fluorosulfonate salt can be fully exhibited.

In any embodiment of the present application, the mass percentage content y3% of the lithium fluorosulfonate salt in the electrolyte solution satisfies $0 < y3 \leq 1.0$ and $0.001 \leq y3/x \leq 2.0$.

In any embodiment of the present application, the electrolyte solution further comprises fluoroethylene carbonate, a lithium fluorosulfonimide salt and a lithium fluorosulfonate salt, and the electrolyte solution satisfies: $0 < y1 \leq 2.5$, $0 < y2 \leq 14$, $0 < y3 \leq 1.0$, $0.5 \leq y1/x \leq 4.0$, $1 \leq y2/x \leq 28$, $0.001 \leq y3/x \leq 2.0$ and $0.5 \leq y2/y1 \leq 48$. In this case, the overall performance of the secondary battery is further improved.

Optionally, when $0 < b \leq 0.7$, the electrolyte solution satisfies: $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$ and $0.5 \leq y2/y1 \leq 10$.

Optionally, when $0.7 \leq b < 0.98$, the electrolyte solution satisfies: $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$ and $6 \leq y2/y1 \leq 48$.

In any embodiment of the present application, the electrolyte solution satisfies: the electrolyte solution further comprises fluoroethylene carbonate, a lithium fluorosulfonimide salt and a lithium fluorosulfonate salt, and the electrolyte solution satisfies: $0 < y1 \leq 2.5$, $0 < y2 \leq 14$, $0 < y3 \leq 1.0$, $0.5 \leq y1/x \leq 4.0$, $1 \leq y2/x \leq 28$, $0.001 \leq y3/x \leq 2.0$, $0.5 \leq y2/y1 \leq 48$ and $0.036 \leq x/(y2 + y3) \leq 1.0$. Thus, it is beneficial to form an inorganic/organic composite interfacial film with excellent performance on the positive electrode and the negative electrode, thereby further improving the overall performance of the secondary battery.

Optionally, when $0 < b \leq 0.7$, the electrolyte solution satisfies: $0 < y1 \leq 2.5$, $0 < y2 \leq 5$, $0 < y3 \leq 1.0$, $0.5 \leq yl/x \leq 4.0$, $1 \leq y2/x \leq 10$, $0.001 \leq y3/x \leq 2.0$, $0.5 \leq y2/y1 \leq 10$ and $0.1 \leq x/(y2 + y3) \leq 1.0$.

Optionally, when $0.7 \leq b < 0.98$, the electrolyte solution satisfies: $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$, $6 \leq y2/y1 \leq 48$ and $0.036 \leq x/(y2 + y3) \leq 0.1$.

In any embodiment of the present application, $0 < c < 0.1$.

In any embodiment of the present application, c = 0.

In any embodiment of the present application, the mass percentage content of the layered material with a

molecular formula of $Li_aNi_bCo_cM1_dM2_eO_fA_g$ is 80% to 99%, optionally 85% to 99%, based on the total mass of the positive electrode film layer.

In any embodiment of the present application, the secondary battery further satisfies: the mass of the electrolyte solution is 10% to 20% of the total mass of the secondary battery. Thus, it is beneficial to the formation of a dense and low-impedance interfacial film on the surface of the positive electrode active material.

A second aspect of the present application provides a method for preparing a secondary battery, comprising the steps of: step 1, assembling a positive electrode plate, a separator, a negative electrode plate and an electrolyte solution into a secondary battery, wherein the positive electrode plate comprises a positive electrode current collector and a positive electrode film layer located on the surface of the positive electrode current collector, the positive electrode film layer comprises a layered material with a molecular formula of $Li_aNi_bCo_cM1_dM2_eO_fA_g$, wherein M1 is selected from Mn, Al or a combination thereof, M2 is selected from one or more of Si, Ti, Mo, V, Ge, Se, Zr, Nb, Ru, Pd, Sb, Ce, Te and W, A is selected from one or more of F, N, P and S, $0.8 \leq a \leq 1.2$, $0 < b < 0.98$, $0 \leq c < 0.1$, $0 < d < 0.5$, $0 \leq e \leq 0.5$, $0 \leq f \leq 2$, $0 \leq g \leq 2$, $b + c + d + e = 1$, and $f + g = 2$, the electrolyte solution comprises lithium tetrafluoroborate, optional fluoroethylene carbonate, an optional lithium fluorosulfonimide salt and an optional lithium fluorosulfonate salt, and the mass percentage content of the lithium tetrafluoroborate in the electrolyte solution is x%, the mass percentage content of the fluoroethylene carbonate in the electrolyte solution is y1%, the mass percentage content of the lithium fluorosulfonimide salt in the electrolyte solution is y2%, and the mass percentage content of the lithium fluorosulfonate salt in the electrolyte solution is y3%, all based on the total mass of the electrolyte solution, and $x > 0$, $y1 \geq 0$, $y2 \geq 0$, and $y3 \geq 0$, and step 2, screening out the secondary battery satisfying $0.05 \leq c + x/10 \leq 0.15$ from the secondary batteries obtained in step 1.

The secondary batteries obtained by the preparation method of the present application all have significantly improved cycling performance and good storage performance and dynamic performance.

In any embodiment of the present application, the method further comprises a step of: screening out the secondary battery satisfying $0 < x \leq 1.0$ and $0.05 \leq c + x/10 \leq 0.15$ from the secondary batteries obtained in step 2. In this case, the prepared secondary battery has further improved cycling performance.

In any embodiment of the present application, the method further comprises a step of: screening out the secondary battery satisfying $25 \leq P/(c + x/10) \leq 65$ from the secondary batteries obtained in step 2, wherein P g/cm$^3$ represents the compacted density of the positive electrode plate. In this case, the prepared secondary battery may further have improved power performance in addition to significantly improved cycling performance and high energy density.

In any embodiment of the present application, the method further comprises a step of: screening out the secondary battery satisfying $0 < y1 + y2 + y3 \leq 15$, $0 < y1 \leq 2.5$, $0 < y2 \leq 14$, $0 < y3 \leq 1.0$, $0.5 \leq yl/x \leq 4.0$, $1 \leq y2/x \leq 28$, $0.001 \leq y3/x \leq 2.0$ and $0.5 \leq y2/y1 \leq 48$ from the secondary batteries obtained in step 2. In this case, the overall performance of the prepared secondary battery is further improved.

Optionally, when $0 < b \leq 0.7$, the method further comprises a step of: screening out the secondary battery satisfying $0 < y1 + y2 + y3 \leq 15$, $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$ and $0.5 \leq y2/y1 \leq 10$ from the secondary batteries obtained in step 2.

Optionally, when $0.7 \leq b < 0.98$, the method further comprises a step of: screening out the secondary battery satisfying $0 < y1 + y2 + y3 \leq 15$, $0 < y1 \leq 2.5$, $5 \leq y2 \leq 14$, $0 < y3 \leq 1.0$, $0.5 \leq yl/x \leq 4.0$, $10 \leq y2/x \leq 28$, $0.001 \leq y3/x \leq 2.0$ and $6 \leq y2/y1 \leq 48$ from the secondary batteries obtained in step 2.

In any embodiment of the present application, the method further comprises a step of: screening out the secondary battery satisfying $0 < y1 + y2 + y3 \leq 15$, $0 < y1 \leq 2.5$, $0 < y2 \leq 14$, $0 < y3 \leq 1.0$, $0.5 \leq y1/x \leq 4.0$, $1 \leq y2/x \leq 28$, $0.001 \leq y3/x \leq 2.0$, $0.5 \leq y2/y1 \leq 48$ and $0.036 \leq x/(y2+y3) \leq 1.0$ from the secondary batteries obtained in step 2. In this case, the overall performance of the prepared secondary battery is further improved.

Optionally, when $0 < b \leq 0.7$, the method further comprises a step of: screening out the secondary battery satisfying $0 < y1 + y2 + y3 \leq 15$, $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$, $0.5 \leq y2/y1 \leq 10$ and $0.1 \leq x/(y2 + y3) \leq 1.0$ from the secondary batteries obtained in step 2.

Optionally, when $0.7 \leq b < 0.98$, the method further comprises a step of: screening out the secondary battery satisfying $0 < y1 + y2 + y3 \leq 15$, $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$, $6 \leq y2/y1 \leq 48$ and $0.036 \leq x/(y2 + y3) \leq 0.1$ from the secondary batteries obtained in step 2.

A third aspect of the present application provides a battery module, comprising a secondary battery of the first aspect of the present application or a secondary battery prepared by the method of the second aspect of the present application.

A fourth aspect of the present application provides a battery pack, comprising one of a secondary battery of the first aspect of the present application or a secondary battery prepared by the method of the second aspect of the present application, and a battery module of the third aspect of the present application.

A fifth aspect of the present application provides a power consuming device, comprising at least one of a secondary battery of the first aspect of the present application or a secondary battery prepared by the method of the second aspect of the present application, a battery module of the third aspect of the present application, and a battery pack of the fourth aspect of the present application.

The secondary battery of the present application has significantly improved cycling performance and good storage performance and dynamic performance, and the battery module, battery pack and power consuming device of the present application comprise the secondary battery provided by the present application, thus having at least the same advantages as the secondary battery.

Brief Description of the Drawings

In order to illustrate the technical solutions of the examples of the present application more clearly, the drawings used in the examples of the present application will be described briefly below. Apparently, the drawings described below are merely some embodiments of the present application, and those of ordinary skill in the art may derive other drawings from these drawings without creative efforts.

Fig. 1 is a schematic diagram of an embodiment of the secondary battery of the present application.
Fig. 2 is an exploded schematic diagram of an embodiment of the secondary battery shown in Fig. 1.
Fig. 3 is a schematic diagram of an embodiment of the battery module of the present application.
Fig. 4 is a schematic diagram of an embodiment of the battery pack of the present application.
Fig. 5 is an exploded schematic diagram of the embodiment of the battery pack shown in Fig. 4.
Fig. 6 is a schematic diagram of an embodiment of a power consuming device comprising the secondary battery of the present application as a power supply.

In the drawings, the figures are not necessarily drawn to scale. List of reference signs: 1. battery pack, 2. upper case body, 3. lower case body, 4. battery module, 5. secondary battery, 51. housing, 52. electrode assembly, and 53. cover plate.

Detailed Description of Embodiments

Hereafter, embodiments of the secondary battery, the preparation method therefor, the battery module, the battery pack and the power consuming device of the present application are specifically disclosed with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

Unless otherwise stated, all the embodiments and optional embodiments of the present application may be combined with one another to form new technical solutions, and such technical solutions should be considered to be included in the disclosure of the present application.

Unless otherwise stated, all the technical features and optional technical features of the present application may be combined with one another to form new technical solutions, and such technical solutions should be considered to be included in the disclosure of the present application.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

In the present application, the term "more" refers to two or more.

A secondary battery, also known as a rechargeable battery or an accumulator, refers to a battery of which an active material can be activated by means of charging for reuse after the battery is discharged. Generally, the secondary battery comprises a positive electrode plate, a negative electrode plate, a separator and an electrolyte solution. During the charge/discharge of the secondary battery, lithium ions are intercalated and de-intercalated back and forth between the positive electrode plate and the negative electrode plate. The separator is provided between the positive electrode plate and the negative electrode plate, and mainly prevents the positive and negative electrodes from shortcircuiting and enables lithium ions to pass through. The electrolyte solution functions to conduct lithium ions between the positive electrode plate and the negative electrode plate.

During the charge of the secondary battery, lithium ions are firstly de-intercalated from the surface of the positive electrode active material, and then the lithium ions in the bulk phase of the positive electrode active material are supplemented to the surface in a timely manner. The cobalt element in the positive electrode active material will affect the ion conduction performance of the positive electrode active material: (1) when the content of the cobalt element in the positive electrode active material is high, the lithium ions in the bulk phase can be supplemented to the surface of the positive electrode active material in a timely manner; and (2) when the content of the cobalt element in the positive electrode active material is low, the lithium ions in the bulk phase can not be supplemented to the surface of the positive electrode active material in a timely manner, but the lithium ions on the surface have been de-intercalated, which will lead to over-delithiation of the surface of the positive electrode active material, thereby affecting the crystal structure of the positive electrode active material (for example, the irreversible distortion of the positive electrode active material and the increase in the number of lattice defects), and weakening the cycling performance of the secondary battery.

In addition, the cobalt element may also stabilize the crystal structure of the positive electrode active material. When the positive electrode active material contains a low content of or free of cobalt, the dissolution rate of metal ions, especially manganese ions, in the positive electrode active material will be accelerated. After migration to a negative electrode, the dissolved manganese ions are reduced to the metal manganese. The formed metal manganese is equivalent to a "catalyst" and may catalyze the decomposition of a solid electrolyte interphase (SEI) film on the surface of the negative electrode. Part of the generated byproduct is gaseous, which easily causes an expansion of the battery and affects the safety performance of the secondary battery. The other part of the generated byproduct is deposited on the surface of the negative electrode, thereby blocking channels for lithium ions to come in and out of the negative electrode, causing the impedance of the secondary to increase, and affecting the dynamic performance of the secondary battery. In addition, in order to supplement the lost SEI film, the electrolyte solution and the active lithium ions inside the battery are further continuously consumed, which further irreversibly affects the capacity retention rate of the secondary battery.

Therefore, it is of great practical significance to stabilize the crystal structure of the low-cobalt or cobalt-free positive electrode active material and increase the diffusion rate of the lithium ions therein. Researchers have been working on improving the diffusion rate of the lithium ions of the low-cobalt or cobalt-free positive electrode active material, but there is no good solution yet.

After a lot of research, the inventors of the present application surprisingly found that the crystal structure of the low-cobalt or cobalt-free positive electrode active material can be stabilized and the diffusion rate of the lithium ions therein can be increased by comprising an appropriate content of lithium tetrafluoroborate in the electrolyte solution and allowing the content of lithium tetrafluoroborate and the content of the cobalt element in the positive electrode active material to satisfy a specific relationship.

## Secondary battery

Specifically, an embodiment of the present application provides a secondary battery comprising an electrolyte solution and a positive electrode plate, wherein the positive electrode plate comprises a positive electrode current collector and a positive electrode film layer located on the surface of the positive electrode current collector, and the positive electrode film layer comprises a layered material with a molecular formula of $Li_aNi_bCo_cM1_dM2_eO_fA_g$, wherein M1 is selected from Mn, Al or a combination thereof, M2 is selected from one or more of Si, Ti, Mo, V, Ge, Se, Zr, Nb, Ru, Pd, Sb, Ce, Te and W, A is selected from one or more of F, N, P and S, $0.8 \leq a \leq 1.2$, $0 < b < 0.98$, $0 \leq c < 0.1$, $0 < d < 0.5$, $0 \leq e \leq 0.5$, $0 \leq f \leq 2$, $0 \leq g \leq 2$, $b + c + d + e = 1$, and $f + g = 2$; and the electrolyte solution comprises lithium

tetrafluoroborate (LiBF$_4$), and the mass percentage content of lithium tetrafluoroborate in the electrolyte solution is x%, based on the total mass of the electrolyte solution, and the secondary battery satisfies: x > 0 and $0.05 \leq c + x/10 \leq 0.15$.

The electrolyte solution is one of the key factors affecting the performance of the secondary battery. At present, the most widely used electrolyte solution system in commercialization is the mixed carbonate solution of lithium hexafluorophosphate. However, lithium hexafluorophosphate has poor thermal stability in high temperature environments and will decompose to generate PF$_5$ at a higher temperature. PF$_5$ has strong Lewis acidity, which will interact with the lone pair of electrons on the oxygen atom in the organic solvent molecule to decompose the organic solvent. In addition, PF$_5$ is highly sensitive to a small amount of moisture in the electrolyte solution and will generate HF when meets water, thereby increasing the acidity of the electrolyte solution, which will easily corrode the positive electrode active material and the positive electrode current collector, resulting in the dissolution of transition metal ions in the positive electrode active material. Therefore, lithium hexafluorophosphate not only does not increase the diffusion rate of the lithium ions of the low-cobalt or cobalt-free positive electrode active material, but also easily corrodes the positive electrode active material and destroys the crystal structure thereof. Therefore, there is a need to improve the electrolyte solution.

The inventors of the present application unexpectedly found during the research process that when the electrolyte solution contains lithium tetrafluoroborate and the mass percentage content x% of lithium tetrafluoroborate and the content c of the cobalt element in the low-cobalt or cobalt-free positive electrode active material satisfy x > 0 and $0.05 \leq c + x/10 \leq 0.15$, the crystal structure of the low-cobalt or cobalt-free positive electrode active material can be stabilized and the diffusion rate of the lithium ions therein can be increased, thereby enabling the secondary battery to have significantly improved cycling performance. In addition, the secondary battery of the present application may also have good storage performance and dynamic performance.

Although the mechanism is not very clear, the inventors speculate that the possible reasons include the following points:

firstly, when the mass percentage content x% of lithium tetrafluoroborate and the content c of the cobalt element in the low-cobalt or cobalt-free positive electrode active material satisfy x > 0 and $0.05 \leq c + x/10 \leq 0.15$, lithium tetrafluoroborate can form a dense and low-impedance interfacial film on the surface of the positive electrode active material, and the B atom in lithium tetrafluoroborate can fully combine with the O atom in the positive electrode active material, thereby reducing the charge transfer impedance of the positive electrode active material, reducing the diffusion impedance of the lithium ions in the bulk phase of the positive electrode active material, avoiding over-delithiation of the surface of the positive electrode active material, and stabilizing the crystal structure of the positive electrode active material. The crystal structure of the positive electrode active material of the present application is more stable, so that the probability of problems such as structural properties, chemical properties or electrochemical properties of the positive electrode active material becoming unstable caused by over-delithiation on the surface thereof is further reduced. Therefore, the secondary battery of the present application may have improved electrochemical performance, particularly significantly improved cycling performance.

Secondly, when the mass percentage content x% of lithium tetrafluoroborate and the content c of the cobalt element in the low-cobalt or cobalt-free positive electrode active material satisfy x > 0 and $0.05 \leq c + x/10 \leq 0.15$, lithium tetrafluoroborate can form a dense and low-impedance interfacial film on the surface of the positive electrode active material, which can effectively reduce the direct contact between the positive electrode active material and the electrolyte solution and in addition reduce the surface oxygen activity of the positive electrode active material. Thus, it is possible to reduce the oxidative decomposition of the electrolyte solution on the positive electrode and reduce the dissolution of the transition metal ions, thereby further improving the electrochemical performance of the secondary battery, for example reducing the irreversible consumption of active lithium ions, reducing the volume expansion rate of the battery, and reducing the interfacial impedance of the positive electrode. Therefore, the secondary battery of the present application may also have good storage performance and dynamic performance.

Thirdly, lithium tetrafluoroborate has high thermal stability and is insensitive to moisture, and thus can improve the high-temperature stability of the secondary battery.

When c + x/10 < 0.05, the content of lithium tetrafluoroborate in the electrolyte solution is not enough to form a dense and low-impedance interfacial film on the surface of the low-cobalt or cobalt-free positive electrode active material, and lithium tetrafluoroborate can not effectively reduce the charge transfer impedance of the low-cobalt or cobalt-free positive electrode active material, effectively reduce the diffusion impedance of the lithium ions in the bulk phase of the low-cobalt or cobalt-free positive electrode active material and inhibit the over-delithiation of the surface of low-cobalt or cobalt-free positive electrode active material, so it is difficult for the secondary battery to have significantly improved cycling performance. When c + x/10 > 0.15, the content of lithium tetrafluoroborate in the electrolyte solution is too high, and due to the low solubility thereof in the electrolyte solution, there is incompletely dissociated molecular lithium tetrafluoroborate in the electrolyte solution, which is easy to precipitate in the electrolyte solution, especially in a low temperature environment, and thus increases the safety risks such as the puncture of the separator, so the cycling performance of safety performance of the secondary battery are poor. In addition, the precipitated lithium tetrafluoroborate also will damage the interface of the electrode, thereby increasing the self-discharge of the secondary battery. In some embodiments, optionally, $0.05 \leq c + x/10 \leq 0.14$, $0.05 \leq c + x/10 \leq 0.13$, $0.05 \leq c + x/10 \leq 0.12$, $0.05 \leq c + x/10 \leq 0.11$ or $0.05 \leq c + x/10 \leq 0.10$.

In the present application, the mass percentage content x% of lithium tetrafluoroborate satisfies x > 0. When the content of lithium tetrafluoroborate is high, and due to the low solubility thereof in the electrolyte solution, there is incompletely dissociated molecular lithium tetrafluoroborate in the electrolyte solution, which is easy to precipitate in the electrolyte solution, especially in a low temperature environment, thus increasing the safety risks such as the puncture of the separator. Therefore, when the content of lithium tetrafluoroborate is high, the cycling performance of safety performance of the secondary battery may deteriorate. In addition, the precipitated lithium tetrafluoroborate also will damage the interface of the electrode, thereby increasing the self-discharge of the secondary battery. In some embodiments, optionally, $0 < x \leq 1.0$.

The inventors of the present application further found during the further research that the content of the cobalt element in the positive electrode active material will also affect the electron conduction performance of the positive electrode active material: (1) when the content of the cobalt element in the positive electrode active material is high, the positive electrode active material has good electron conduction performance; and (2) when the content of the cobalt element in the positive electrode active material is low, the electron conduction of the positive electrode active material will deteriorate, and then the power performance of the secondary battery will deteriorate. In addition, the greater the compacted density of the positive electrode plate, the worse the power performance of the secondary battery. Therefore, in order to ensure that the secondary battery has good power performance, the strategy usually adopted in the prior art is to reduce the compacted density of the positive electrode plate, but the energy density of the secondary battery will be sacrificed thereby.

The inventors of the present application have surprisingly found that when the compacted density P g/cm$^3$ of the positive electrode plate, the mass percentage content x% of lithium tetrafluoroborate and the content c of the cobalt element in the low-cobalt or cobalt-free positive electrode active material further satisfy $25 \leq P/(c + x/10) \leq 65$, the secondary battery may further have improved power performance in addition to improved cycling performance and high energy density, for example, both the initial power and increase of power in the cycling of the secondary battery can be significantly improved. Although the mechanism is not very clear, the inventors speculate that possible reasons lie in: firstly, when the content of lithium tetrafluoroborate is in an appropriate range, it is possible to stabilize the crystal structure of the low-cobalt or cobalt-free positive electrode active material, thereby enabling it to have good electron conduction performance; and secondly, an appropriate compacted density is beneficial for the positive electrode plate to form a good electronically conductive network.

Therefore, when $25 \leq P/(c + x/10) \leq 65$, the secondary battery may further have improved power performance in addition to improved cycling performance and high energy density, and the following situations can be effectively avoided: when $P/(c + x/10) < 25$, the positive electrode plate may have a low compacted density, and thus the electronically conductive network in the positive electrode plate is poor, which can not effectively improve the power performance of the secondary battery while sacrificing the energy density of the secondary battery; or the content of lithium tetrafluoroborate may be high, which may lead to the deterioration of the stability of the interfacial film on the negative electrode, and then lead to the high internal resistance and poor power performance of the battery; and when $P/(c + x/10) > 65$, the content of lithium tetrafluoroborate may be not enough to offset the deterioration of the power performance of the secondary battery caused by the increase of the compacted density of the positive electrode plate, so the power performance of the secondary battery is also deteriorated. Optionally, $25 \leq P/(c + x/10) \leq 60$, $25 \leq P/(c + x/10) \leq 55$, $25 \leq P/(c + x/10) \leq 50$, $25 \leq P/(c + x/10) \leq 45$, $25 \leq P/(c + x/10) \leq 40$, $30 \leq P/(c + x/10) \leq 65$, $30 \leq P/(c + x/10) \leq 60$, $30 \leq P/(c + x/10) \leq 55$, $30 \leq P/(c + x/10) \leq 50$ or $30 \leq P/(c + x/10) \leq 45$.

In some embodiments, optionally, the compacted density P g/cm$^3$ of the positive electrode plate satisfies that P is 3.3 to 3.6, more optionally 3.4 to 3.5. Thus, it is beneficial for the secondary battery to have a high energy density.

[Electrolyte solution]

In some embodiments, in addition to lithium tetrafluoroborate, the electrolyte solution may further comprises one or more of fluoroethylene carbonate (FEC), a lithium fluorosulfonimide salt and a lithium fluorosulfonate salt, wherein the mass percentage content of the fluoroethylene carbonate in the electrolyte solution is y1%, the mass percentage content of the lithium fluorosulfonimide salt in the electrolyte solution is y2%, and the mass percentage content of the lithium fluorosulfonate salt in the electrolyte solution is y3%, all based on the total mass of the electrolyte solution, and the electrolyte solution satisfies: $y1 \geq 0$, $y2 \geq 0$, $y3 \geq 0$, and $0 < y1 + y2 + y3 \leq 15$. Lithium tetrafluoroborate can form a dense and low-impedance interfacial film on the surface of the positive electrode active material, but the long-term stability of the interfacial film formed by lithium tetrafluoroborate on the negative electrode is poor, so when the electrolyte solution further contains the above compounds, it is beneficial to form a more stable interfacial film on the positive electrode and/or the negative electrode, thus further improving the electrochemical performance of the secondary battery.

In some embodiments, the electrolyte solution may further comprise fluoroethylene carbonate. Optionally, the mass percentage content y1% of the fluoroethylene carbonate satisfies $0 < y1 \leq 2.5$. For example, y1 may be 0.10, 0.20, 0.50, 0.75, 1.0, 1.25, 1.50, 1.75, 2.0, 2.5 or a range consisting of any of the above values. More optionally, $0 < y1 \leq 2.0$, $0 < y1 \leq 1.75$, $0 < y1 \leq 1.5$, $0 < y1 \leq 1.25$, $0 < y1 \leq 1.0$, $0 < y1 \leq 0.75$ or $0 < y1 \leq 0.5$.

For the secondary battery, fluoroethylene carbonate may undergo a reductive decomposition reaction at a high potential, and form a flexible SEI film on the surface of the negative electrode active material, and at the same time inhibit the reductive decomposition of the organic solvent at a lower potential and inhibit the intercalation of the organic solvent into the negative electrode active material. Therefore, when the electrolyte solution further contains fluoroethylene carbonate, the interfacial film on the negative electrode can be stabilized, thereby effectively improving the cycling performance of the secondary battery. In addition, fluoroethylene carbonate is resistant to high-voltage oxidation, which is beneficial to match high-voltage positive electrode active materials, and thus is beneficial to improve the energy density of the secondary battery. However, HF will be formed when fluoroethylene carbonate is decomposed at a high temperature, which will increase the acidity of the electrolyte solution, destroy the structural stability of the positive electrode active material and increase the gas production of the secondary battery, thereby deteriorating the high-temperature storage performance of the secondary battery. Therefore, the content of fluoroethylene carbonate should not be too high.

In some embodiments, the mass percentage content x% of lithium tetrafluoroborate and the mass percentage content y1% of fluoroethylene carbonate may further satisfy $0.5 \leq y1/x \leq 4.0$. The inventors of the present application have surprisingly found that by reasonably controlling the relationship between the mass percentage content x% of lithium tetrafluoroborate and the mass percentage content y1% of fluoroethylene carbonate and allowing same to satisfy $0.5 \leq y1/x \leq 4.0$, the synergistic effect of lithium tetrafluoroborate and fluoroethylene carbonate can be fully exerted, thus not only not significantly increasing the gas production of the secondary battery, but also further improving the cycling performance of the secondary battery. The possible reason lies in that lithium tetrafluoroborate is used as a stabilizer of the positive electrode active material, and the B atoms in the structure thereof further have the function of interacting with the O atoms on the surface of the positive electrode active material, thereby inhibiting the damage of HF on the structure of the positive electrode active material. Optionally, $0.5 \leq y1/x \leq 3.5$, $0.5 \leq y1/x \leq 3.0$, $0.5 \leq y1/x \leq 2.5$, $0.5 \leq y1/x \leq 2.0$, $0.5 \leq y1/x \leq 1.5$ or $0.5 \leq y1/x \leq 1.0$.

In some embodiments, the electrolyte solution may further comprise a lithium fluorosulfonimide salt. the lithium fluorosulfonimide salt may have a molecular formula of $LiN(SO_2R_1)(SO_2R_2)$, wherein $R_1$ and $R_2$ each independently represent F or $C_nF_{2n+1}$, and n is an integer of 1-10. Optionally, the lithium fluorosulfonimide salt includes lithium difluorosulfoimide (LiFSI), lithium bistrifluoromethanesulfonimide (LiTFSI) or a combination thereof.

Optionally, the mass percentage content y2% of the lithium fluorosulfonimide salt satisfies $0 < y2 \leq 14$. For example, y2 may be 0.5, 1, 2, 3, 4, 5, 6, 7, 8, 9, 10, 11, 12, 13, 14 or a range consisting of any of the above values.

The fluorosulfonimide anion is a weakly coordinated anion with N as the center and contains conjugated groups and strong electroabsorbing -F or $-C_nF_{2n+1}$, the anion charge is highly delocalized, and the interaction force between the anion and the lithium ion is weak. Therefore, the lithium fluorosulfonimide salt has a low lattice energy and is easy to dissociate, so that the ionic conductivity of the electrolyte solution can be improved, the viscosity of the electrolyte solution can be reduced, and the rate performance and low-temperature performance of the secondary battery can be improved. At the same time, the lithium fluorosulfonimide salt also has high thermal stability and is difficult to hydrolyze, so that a thinner SEI film with lower impedance and higher thermal stability can be formed on the surface of the negative electrode active material, thereby reducing the side reaction between the negative electrode active material and the electrolyte solution. Therefore, when the electrolyte solution further comprises a lithium fluorosulfonimide salt, the rate performance and low-temperature performance of the secondary battery can be significantly improved. However, the lithium fluorosulfonimide salt is not resistant to high voltage and will corrode the positive electrode current collector (for example, aluminum foil) at a higher potential and increase the side reaction between the positive electrode active material and the electrolyte solution, thereby easily affecting the cycling performance of the secondary battery. Therefore, the content of the lithium fluorosulfonimide salt should not be too high.

In some embodiments, the mass percentage content x% of lithium tetrafluoroborate and the mass percentage content y2% of a lithium fluorosulfonimide salt may further satisfy $1 \leq y2/x \leq 28$. The inventors of the present application have surprisingly found that by reasonably controlling the relationship between the mass percentage content x% of lithium tetrafluoroborate and the mass percentage content y2% of a lithium fluorosulfonimide salt and allowing same to satisfy $1 \leq y2/x \leq 28$, the synergistic effect of lithium tetrafluoroborate and the lithium fluorosulfonimide salt can be fully exerted, thus not only not significantly deteriorating the cycling performance of the secondary battery, but also further improving the rate performance and low-temperature performance of the secondary battery. The possible reason lies in that lithium tetrafluoroborate is used as a stabilizer of the positive electrode active material and can form a dense and low-impedance interfacial film on the surface of the positive electrode active material, thus inhibiting the side reaction between the positive electrode active material and the electrolyte solution; in addition, lithium tetrafluoroborate can passivate the positive electrode current collector, which can be firstly oxidized and decomposed on the surface of the positive electrode current collector to form a passivation film, thus effectively alleviating the corrosion of the positive electrode current collector by a lithium fluorosulfonimide salt.

The inventors further found during the further research that the content b of nickel element in the positive electrode active material will affect the effect of a lithium fluorosulfonimide salt on improving the performance of the secondary battery. When the content of nickel is high, the thermal stability of the positive electrode active material is poor, and the high-temperature capacity attenuation is accelerated. Therefore, when a higher content of a lithium fluorosulfonimide salt is used, the effect thereof on improving the high-temperature performance of the secondary battery is more obvious; when the content of nickel is low, the thermal stability of the positive electrode active material is good, but with the increase of the content of a lithium fluorosulfonimide salt in the electrolyte solution, the effect thereof on improving the high-temperature performance of the secondary battery will not continue to increase.

In some embodiments, when $0 < b \leq 0.7$, the mass percentage content $y2\%$ of the lithium fluorosulfonimide salt in the electrolyte solution satisfies: $0 < y2 \leq 5$ and/or $1 \leq y2/x \leq 10$.

Optionally, $0 < y2 \leq 4.5$, $0 < y2 \leq 4$, $0 < y2 \leq 3.5$, $0 < y2 \leq 3$, $0 < y2 \leq 2.5$, $0 < y2 \leq 2$, $0 < y2 \leq 1.5$ or $0 < y2 \leq 1$.

Optionally, $1 \leq y2/x \leq 9$, $1 \leq y2/x \leq 8$, $1 \leq y2/x \leq 7$, $1 \leq y2/x \leq 6$, $1 \leq y2/x \leq 5$, $1 \leq y2/x \leq 4$, $1 \leq y2/x \leq 3$ or $1 \leq y2/x \leq 2$.

In some embodiments, when $0.7 \leq b < 0.98$, the mass percentage content $y2\%$ of the lithium fluorosulfonimide salt in the electrolyte solution satisfies: $5 \leq y2 \leq 14$ and/or $10 \leq y2/x \leq 28$.

Optionally, $5 \leq y2 \leq 13$, $5 \leq y2 \leq 12$, $5 \leq y2 \leq 11$, $5 \leq y2 \leq 10$, $6 \leq y2 \leq 14$, $6 \leq y2 \leq 13$, $6 \leq y2 \leq 12$, $6 \leq y2 \leq 11$, $6 \leq y2 \leq 10$, $7 \leq y2 \leq 14$, $7 \leq y2 \leq 13$, $7 \leq y2 \leq 12$, $7 \leq y2 \leq 11$, $7 \leq y2 \leq 10$, $8 \leq y2 \leq 14$, $8 \leq y2 \leq 13$, $8 \leq y2 \leq 12$, $8 \leq y2 \leq 11$ or $8 \leq y2 \leq 10$.

Optionally, $12 \leq y2/x \leq 28$, $12 \leq y2/x \leq 26$, $12 \leq y2/x \leq 24$, $12 \leq y2/x \leq 22$, $12 \leq y2/x \leq 20$, $14 \leq y2/x \leq 28$, $14 \leq y2/x \leq 26$, $14 \leq y2/x \leq 24$, $14 \leq y2/x \leq 22$, $14 \leq y2/x \leq 20$, $16 \leq y2/x \leq 28$, $16 \leq y2/x \leq 26$, $16 \leq y2/x \leq 24$, $16 \leq y2/x \leq 22$ or $16 \leq y2/x \leq 20$.

In some embodiments, the electrolyte solution may further comprise a lithium fluorosulfonate salt. the lithium fluorosulfonate salt may have a molecular formula of $LiSO_3R_3$, wherein $R_3$ represents F, or a partially or fully fluorinated C1-C10 alkyl, and optionally the lithium fluorosulfonate salt includes lithium fluorosulfonate, lithium trifluoromethanesulfonate or a combination thereof.

Optionally, the mass percentage content $y3\%$ of the lithium fluorosulfonate salt satisfies $0 < y3 \leq 1.0$. For example, y3 may be 0.10, 0.20, 0.30, 0.40, 0.50, 0.60, 0.70, 0.80, 0.90, 1.0 or a range consisting of any of the above values. More Optionally, $0 < y3 \leq 0.9$, $0 < y3 \leq 0.8$, $0 < y3 \leq 0.7$, $0 < y3 \leq 0.6$, $0 < y3 \leq 0.5$, $0 < y3 \leq 0.4$, $0 < y3 \leq 0.3$ or $0 < y3 \leq 0.2$.

the lithium fluorosulfonate salt can form an interfacial film not only on the surface of the negative electrode active material material, but also on the surface of the positive electrode active material. At the same time, the lithium fluorosulfonate salt has high thermal stability, which can greatly improve the charge and discharge characteristics of the secondary battery at high temperature, improve the high-temperature cycling capacity retention rate of the secondary battery and inhibit gas production. However, the ionic conductivity of the lithium fluorosulfonate salt is low, which easily affects the dynamic performance of the secondary battery. Therefore, the content of the lithium fluorosulfonate salt should not be too high.

In some embodiments, the mass percentage content $x\%$ of lithium tetrafluoroborate and the mass percentage content $y3\%$ of the lithium fluorosulfonate salt may further satisfy $0.001 \leq y3/x \leq 2.0$. The inventors of the present application have surprisingly found that by reasonably controlling the relationship between the mass percentage content $x\%$ of lithium tetrafluoroborate and the mass percentage content $y3\%$ of a lithium fluorosulfonate salt and allowing same to satisfy $0.001 \leq y3/x \leq 2.0$, the synergistic effect of lithium tetrafluoroborate and the lithium fluorosulfonate salt can be fully exerted, thus contributing to form a dense, stable and low-impedance interfacial film on the positive electrode and the negative electrode, thereby further improving the high-temperature performance of the secondary battery, for example improving the high-temperature cycling performance and the high-temperature storage performance, without significantly deteriorating the dynamic performance of the secondary battery. Optionally, $0.001 \leq y3/x \leq 1.5$, $0.001 \leq y3/x \leq 1.25$, $0.001 \leq y3/x \leq 1.0$, $0.001 \leq y3/x \leq 0.75$, $0.001 \leq y3/x \leq 0.5$ or $0.001 \leq y3/x \leq 0.25$.

In some embodiments, the electrolyte solution may further comprise any two of fluoroethylene carbonate, a lithium fluorosulfonimide salt, and a lithium fluorosulfonate salt.

For example, in some embodiments, the electrolyte solution may comprise a combination of fluoroethylene carbonate and a lithium fluorosulfonimide salt. Optionally, the mass percentage content $y1\%$ of the fluoroethylene carbonate satisfies $0 < y1 \leq 2.5$, the mass percentage content $y2\%$ of a lithium fluorosulfonimide salt satisfies $0 < y2 \leq 14$, and $0 < y1 + y2 \leq 15$.

Optionally, the mass percentage content $x\%$ of lithium tetrafluoroborate, the mass percentage content $y1\%$ of the fluoroethylene carbonate, and the mass percentage content $y2\%$ of the lithium fluorosulfonimide salt further satisfy $0.5 \leq y1/x \leq 4.0$ and/or $1 \leq y2/x \leq 28$. Therefore, the secondary battery has significantly improved cycling performance, as well as improved rate performance and low-temperature performance.

Optionally, the mass percentage content $y1\%$ of the fluoroethylene carbonate and the mass percentage content $y2\%$ of the lithium fluorosulfonimide salt may further satisfy $0.5 \leq y2/y1 \leq 48$.

More optionally, the mass percentage content $x\%$ of lithium tetrafluoroborate, the mass percentage content y1% of the fluoroethylene carbonate, and the mass percentage content y2% of the lithium fluorosulfonimide salt further satisfy $0.5 < y1/x \leq 4.0$, $1 \leq y2/x \leq 28$ and $0.5 \leq y2/y1 \leq 48$. The fluoroethylene carbonate can effectively improve the cycling performance of the secondary battery, and the lithium fluorosulfonimide salt can improve the rate performance and low-temperature performance of the secondary battery. Lithium tetrafluoroborate is used as a stabilizer of the positive electrode active material and can form a dense and low-impedance interfacial film on the surface of the positive electrode active material, thereby significantly improving the diffusion rate of the lithium ions of the low-cobalt or cobalt-free positive electrode active material, and inhibiting the side reaction between the positive electrode active material and the electrolyte solution and the damage of HF to the structure of the positive electrode active material. Therefore, when the relationship of the contents among the three components is further reasonably adjusted to satisfy $0.5 \leq y1/x \leq 4.0$, $1 \leq y2/x \leq 28$ and $0.5 \leq y2/y1 \leq 48$, it is beneficial to give full play to the synergistic effect among the above three components, fully inhibit the defects when the components are used alone, and at the same time form dense, stable and low-impedance interfacial films on the positive electrode and negative electrode.

Particularly, when $0 < b \leq 0.7$, the electrolyte solution may satisfy $0 < y1 \leq 2.5$ and $0 < y2 \leq 5$; optionally, the electrolyte solution may further satisfy $0.5 \leq y1/x \leq 4.0$ and $1 \leq y2/x \leq 10$; and more optionally, the electrolyte solution may further satisfy $0.5 \leq y2/y1 \leq 10$.

Particularly, when $0.7 \leq b < 0.98$, the electrolyte solution may satisfy $0 < y1 \leq 2.5$ and $5 \leq y2 \leq 14$; optionally, the electrolyte solution may further satisfy $0.5 \leq y1/x \leq 4.0$ and $10 \leq y2/x \leq 28$; and more optionally, the electrolyte solution may further satisfy $6 \leq y2/y1 \leq 48$.

For example, in some embodiments, the electrolyte solution may comprise a combination of fluoroethylene carbonate and a lithium fluorosulfonate salt. Optionally, the mass percentage content y1% of the fluoroethylene carbonate satisfies $0 < y1 \leq 2.5$, and the mass percentage content y3% of the lithium fluorosulfonate salt satisfies $0 < y3 \leq 1.0$. More optionally, the mass percentage content x% of lithium tetrafluoroborate, the mass percentage content y1% of the fluoroethylene carbonate, and the mass percentage content y3% of the lithium fluorosulfonate salt further satisfy $0.5 \leq y1/x \leq 4.0$ and/or $0.001 \leq y3/x \leq 2.0$. Therefore, the secondary battery has significantly improved cycling performance, and improved high-temperature performance.

For example, in some embodiments, the electrolyte solution may comprise a combination of a lithium fluorosulfonimide salt and a lithium fluorosulfonate salt. Optionally, the mass percentage content y2% of the lithium fluorosulfonimide salt satisfies $0 < y2 \leq 14$, the mass percentage content y3% of the lithium fluorosulfonate salt satisfies $0 < y3 \leq 1.0$, and $0 < y2 + y3 \leq 15$.

Optionally, the mass percentage content x% of lithium tetrafluoroborate, the mass percentage content y2% of a lithium fluorosulfonimide salt, the mass percentage content y3% of a lithium fluorosulfonate salt further satisfy $1 \leq y2/x \leq 28$ and/or $0.001 \leq y3/x \leq 2.0$. Therefore, the secondary battery has significantly improved cycling performance, as well as improved rate performance, low-temperature performance and high-temperature performance. More optionally, the mass percentage content x% of lithium tetrafluoroborate, the mass percentage content y2% of a lithium fluorosulfonimide salt, and the mass percentage content y3% of a lithium fluorosulfonate salt further satisfy $1 \leq y2/x \leq 28$, $0.001 \leq y3/x \leq 2.0$ and $0.036 \leq x/(y2 + y3) \leq 1.0$. Thus, it is beneficial to form an inorganic/organic composite interfacial film with excellent performance on the positive electrode and the negative electrode, thereby further improving the overall performance of the secondary battery.

Particularly, when $0 < b \leq 0.7$, the electrolyte solution may satisfy $0 < y2 \leq 5$ and $0 < y3 \leq 1.0$; optionally, the electrolyte solution may further satisfy $1 \leq y2/x \leq 10$ and $0.001 \leq y3/x \leq 2.0$; and more optionally, the electrolyte solution may further satisfy $0.1 \leq x/(y2 + y3) \leq 1.0$.

Particularly, when $0.7 \leq b < 0.98$, the electrolyte solution may satisfy $5 \leq y2 \leq 14$ and $0 < y3 \leq 1.0$; optionally, the electrolyte solution may further satisfy $10 \leq y2/x \leq 28$ and $0.001 \leq y3/x \leq 2.0$; and more optionally, the electrolyte solution may further satisfy $0.036 \leq x/(y2 + y3) \leq 0.1$.

In some embodiments, the electrolyte solution may further comprise fluoroethylene carbonate, a lithium fluorosulfonimide salt and a lithium fluorosulfonate salt. Optionally, the mass percentage content y1% of the fluoroethylene carbonate satisfies $0 < y1 \leq 2.5$, the mass percentage content y2% of the lithium fluorosulfonimide salt satisfies $0 < y2 \leq 14$, the mass percentage content y3% of the lithium fluorosulfonate salt satisfies $0 < y3 \leq 1.0$, and $0 < y1 + y2 + y3 \leq 15$.

Optionally, the electrolyte solution further satisfies $0.5 \leq y1/x \leq 4.0$, $1 \leq y2/x \leq 28$ and $0.001 \leq y3/x \leq 2.0$. Therefore, the secondary battery has significantly improved cycling performance, as well as improved rate performance, low-temperature performance and high-temperature performance. More optionally, the electrolyte solution further satisfies $0.5 \leq y1/x \leq 4.0$, $1 \leq y2/x \leq 28$, $0.001 \leq y3/x \leq 2.0$ and $0.5 \leq y2/y1 \leq 48$. In this case, the overall performance of the secondary battery is further improved. Further optionally, the electrolyte solution further satisfies $0.5 \leq y1/x \leq 4.0$, $1 \leq y2/x \leq 28$, $0.001 \leq y3/x \leq 2.0$, $0.5 \leq y2/y1 \leq 48$ and $0.036 < x/(y2 + y3) \leq 1.0$. Thus, it is beneficial to form an inorganic/organic composite interfacial film with excellent performance on the positive electrode and the negative electrode, thereby further improving the overall performance of the secondary battery.

Particularly, when $0 < b \leq 0.7$, the electrolyte solution may satisfy $0 < y1 \leq 2.5$, $0 < y2 \leq 5$ and $0 < y3 \leq 1.0$; optionally, the electrolyte solution may further satisfy $0.5 \leq y1/x \leq 4.0$, $1 \leq y2/x \leq 10$ and $0.001 \leq y3/x \leq 2.0$; and more optionally, the electrolyte solution may further satisfy $0.5 \leq y2/y1 \leq 10$ and/or $0.1 \leq x/(y2 + y3) \leq 1.0$.

Particularly, when $0.7 \leq b < 0.98$, the electrolyte solution may satisfy $0 < y1 \leq 2.5$, $5 \leq y2 \leq 14$ and $0 < y3 \leq 1.0$; optionally, the electrolyte solution may further satisfy $0.5 \leq y1/x \leq 4.0$, $10 \leq y2/x \leq 28$ and $0.001 \leq y3/x \leq 2.0$; and more optionally, the electrolyte solution may further satisfy: $6 \leq y2/y1 \leq 48$ and/or $0.036 \leq x/(y2 + y3) \leq 0.1$.

In some embodiments, the electrolyte solution further comprises a lithium salt and an organic solvent. In the present application, the type of the lithium salt and the organic solvent is not specifically limited, and can be selected according to actual requirements.

As an example, the lithium salt may include one or more of lithium hexafluorophosphate ($LiPF_6$), lithium perchlorate ($LiClO_4$), lithium hexafluoroarsenate ($LiAsF_6$), lithium difluorooxalate borate (LiDFOB), lithium dioxalate borate (LiBOB), lithium difluorophosphate ($LiPO_2F_2$), lithium bisoxalatodifluorophosphate (LiDFOP), and lithium tetrafluorooxalate phosphate (LiTFOP). Optionally, the lithium salt includes lithium hexafluorophosphate.

As an example, the organic solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In an embodiment of the secondary battery of the present application, the electrolyte solution does not exclude other components than the above-mentioned components. In some embodiments, the electrolyte solution may optionally comprise other additives, for example, an additive for improving the overcharge performance of a battery, an additive for improving the high-temperature performance of a battery, and an additive for improving the low-temperature power performance of a battery, etc.

In some embodiments, the mass of the electrolyte solution may be 10% to 20% of the total mass of the secondary battery. Thus, it is beneficial to the formation of a dense and low-impedance interfacial film on the surface of the positive electrode active material, and the following situations can be effectively avoided: when the mass fraction of the electrolyte solution is less than 10%, the positive electrode and negative electrode have poor electrolyte solution infiltration, high interfacial impedance and rapid impedance increase after cycling, which may lead to poor capacity and poor cycling performance of the secondary battery; and when the mass fraction of the electrolyte solution is greater than 20%, the interfacial side reactions between the electrolyte solution and the positive electrode and between the electrolyte solution and the negative electrode increase, the irreversible consumption of the active lithium ions increases and the volume of the battery expands seriously, which may also lead to the deterioration of the cycling performance of the secondary battery.

The electrolyte solution can be prepared according to conventional methods in the art. For example, components such as an organic solvent, a lithium salt, lithium tetrafluoroborate, optional fluoroethylene carbonate, an optional lithium fluorosulfonimide salt, and an optional lithium fluorosulfonate salt can be mixed uniformly to obtain the electrolyte solution. The addition sequence of the materials is not particularly limited, for example, components such as a lithium salt, lithium tetrafluoroborate, optional fluoroethylene carbonate, an optional lithium fluorosulfonimide salt, and an optional lithium fluorosulfonate salt can be added into an organic solvent and mixed uniformly to obtain the electrolyte solution; or, a lithium salt is first added into an organic solvent, and then the components such as lithium tetrafluoroborate, optional fluoroethylene carbonate, an optional lithium fluorosulfonimide salt, and an optional lithium fluorosulfonate salt are added into the organic solvent and mixed uniformly to obtain the electrolyte solution.

In the present application, each component and the content thereof in the electrolyte solution can be determined according to methods known in the art. For example, they can be determined by gas chromatography-mass spectrometry (GC-MS), ion chromatography (IC), liquid chromatography (LC), nuclear magnetic resonance spectroscopy (NMR), etc.

It should be noted that when testing the electrolyte solution of the present application, the electrolyte solution can be obtained from a secondary battery. An exemplary method of obtaining electrolyte solution from a secondary battery comprises the steps of: discharging the secondary battery to a discharge cut-off voltage (for safety reasons, the battery is generally in a fully discharged state) and centrifuging same, and then a proper amount of liquid obtained by centrifugation is the electrolyte solution. The electrolyte solution can also be directly obtained from the liquid injection port of the secondary battery.

[Positive electrode plate]

The positive electrode plate of the present application comprises a positive electrode current collector and a positive electrode film layer located on the surface of the positive electrode current collector. For example, the positive electrode current collector has two opposite surfaces in the thickness direction thereof and the positive electrode film layer is located on either or both of the two opposite surfaces of the positive electrode current collector.

The positive electrode current collector may be a metal foil or a composite current collector. As an example of the metal foil, an aluminum foil may be used. The composite current collector may comprise a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polystyrene ethylene (PE).

The positive electrode film layer typically comprises a positive electrode active material, an optional binder and an optional conductive agent. The positive electrode film layer is typically formed by coating a positive electrode slurry on the positive electrode current collector, followed by drying and cold pressing. The positive electrode slurry is typically formed by dispersing a positive electrode active material, an optional conductive agent, an optional binder and any other components into a solvent and stirring uniformly. The solvent may be N-methylpyrrolidone (NMP), but is not limited thereto. As an example, the binder for the positive electrode film layer may include one or more of polyvinylidene fluoride (PVDF), polytetrafluoroethylene (PTFE), a vinylidene fluoridetetrafluoroethylene-propylene terpolymer, a vinylidene fluoride-hexafluoropropylenetetrafluoroethylene terpolymer, a tetrafluoroethylene-hexafluoropropylene copolymer, and a fluorinecontaining acrylate resin. As an example, the conductive agent for the positive electrode film layer may include one or more of superconductive carbon, conductive graphite, acetylene black, carbon black, Ketjen black, carbon dots, carbon nanotubes, graphene, and carbon nanofibers.

The positive electrode active material comprises a layered material with a molecular formula of $Li_aNi_bCo_cM1_dM2_eO_fA_g$.

In some embodiments, the layered material with a molecular formula of $Li_aNi_bCo_cM1_dM2_eO_fA_g$ is optionally modified by M2 cation doping, A anion doping or both M2 cation and A anion doping, and the crystal structure of the layered material obtained after doping is more stable, which can further improve the electrochemical performance of the secondary battery, such as cycling performance and rate performance.

In some embodiments, A is selected from F. After modified by F doping, the structure of $Li_aNi_bCo_cM1_dM2_eO_fA_g$ is more stable, which enables the secondary battery to have better cycling performance and rate performance.

In some embodiments, M1 is selected from Mn.

In some embodiments, M1 is selected from Al.

In some embodiments, M1 is selected from a combination of Mn and Al. The molar ratio of Mn to Al is not particularly limited and can be selected according to actual requirements.

In some embodiments, $0.50 \leq b < 0.98$. Optionally, $0.55 \leq b < 0.98$, $0.60 \leq b < 0.98$, $0.65 \leq b < 0.98$, $0.70 \leq b < 0.98$, $0.75 \leq b < 0.98$ or $0.80 \leq b < 0.98$.

In some embodiments, $c = 0$.

In some embodiments, $0 < c < 0.1$. Optionally, $0 < c \leq 0.09$, $0 < c \leq 0.08$, $0 < c \leq 0.07$, $0 < c \leq 0.06$, $0 < c \leq 0.05$, $0 < c \leq 0.04$, $0 < c \leq 0.03$, $0 < c \leq 0.02$ or $0 < c \leq 0.01$.

In some embodiments, $0 < d \leq 0.45$. Optionally, $0 < d \leq 0.40$, $0 < d \leq 0.35$, $0 < d \leq 0.30$, $0 < d \leq 0.25$, $0 < d \leq 0.20$, $0 < d \leq 0.15$ or $0 < d \leq 0.10$.

In some embodiments, $e = 0$.

In some embodiments, $0 < e ::::; 0.5$. Optionally, $0 < e \leq 0.45$, $0 < e \leq 0.40$, $0 < e \leq 0.35$, $0 < e \leq 0.30$, $0 < e \leq 0.25$, $0 < e \leq 0.20$, $0 < e \leq 0.15$, $0 < e \leq 0.10$ or $0 < e \leq 0.05$.

In some embodiments, $f = 2$, and $g = 0$.

In some embodiments, $f = 0$, and $g = 2$.

In some embodiments, $0 < f < 2$, $0 < g < 2$, and $f + g = 2$.

As an example, the layered material with a molecular formula of $Li_aNi_bCo_cM1_dM2_eO_fA_g$ includes, but is not limited to, one or more of $LiNi_{0.7}Mn_{0.3}O_2$, $LiNi_{0.69}Co_{0.01}Mn_{0.3}O_2$, $LiNi_{0.68}Co_{0.02}Mn_{0.3}O_2$, $LiNi_{0.65}Co_{0.05}Mn_{0.3}O_2$, $LiNi_{0.63}Co_{0.07}Mn_{0.3}O_2$, and $LiNi_{0.61}Co_{0.09}Mn_{0.3}O_2$.

$Li_aNi_bCo_cM1_dM2_eO_fA_g$ can be prepared according to conventional methods in the art. An exemplary preparation method is as follows: mixing a lithium source, a nickel source, a cobalt source, a precursor of M1 element, an optional precursor of M2 element, and an optional precursor of A element and then sintering same. The sintering atmosphere may be an oxygen-containing atmosphere, for example, an air atmosphere or an oxygen atmosphere. The concentration of $O_2$ in the sintering atmosphere is, for example, 70% to 100%. The sintering temperature and time can be adjusted according to the actual situation. As an example, the lithium source includes, but is not limited to, one or more of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$). As an example, the nickel source includes, but is not limited to, one or more of nickel sulfate, nickel nitrate, nickel chloride, nickel oxalate, and nickel acetate. As an example, the cobalt source includes, but is not limited to, one or more of cobalt sulfate, cobalt nitrate, cobalt chloride, cobalt oxalate, and cobalt acetate. As an example, the precursor of M1 element includes, but is not limited to, one or more of oxides, nitrates, carbonates, hydroxides and acetates of M1 element. As an example, the precursor of M2 element includes, but is not limited to, one or more of oxides, nitrates, carbonates, hydroxides and acetates of M2 element. As an example, the precursor of element A includes, but is not limited to, one or more of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium hydrogen sulfite, ammonium sulfite, ammonium hydrosulfide, hydrogen sulfide, lithium sulfide, ammonium sulfide and elemental sulfur.

In some embodiments, the surface of $Li_aNi_bCo_cM1_dM2_eO_fA_g$ may further have a coating layer, such as a carbon coating layer. The carbon coating layer is beneficial to stabilize the surface of the positive electrode active material, thereby further reducing the charge transfer impedance of the positive electrode active material, and reducing the diffusion impedance of the lithium ions in the bulk phase of the positive electrode active material. Optionally, the carbon coating layer comprises amorphous carbon, such as soft carbon, hard carbon or a combination thereof.

In some embodiments, the positive electrode active material does not exclude other components in addition to $Li_aNi_bCo_cM1_dM2_eO_fA_g$, for example, the positive electrode active material may further comprise one or more of lithium-containing phosphate and a modified compound thereof. As an example, the lithium-containing phosphate may include, but is not limited to, one or more of lithium iron phosphate, a lithium iron phosphate-carbon composite, lithium manganese phosphate, a lithium manganese phosphate-carbon composite, lithium iron manganese phosphate, a lithium iron manganese phosphate-carbon composite and a respective modified compound thereof.

In some embodiments, the mass percentage content of the layered material with a molecular formula of $Li_aNi_bCo_cM1_dM2_eO_fA_g$ is 80% to 99%, based on the total mass of the positive electrode film layer. For example, the mass percentage content of the layered material with a molecular formula of $Li_aNi_bCo_cM1_dM2_eO_fA_g$ is 80%, 81%, 82%, 83%, 84%, 85%, 86%, 87%, 88%, 89%, 90%, 91%, 92%, 93%, 94%, 95%, 96%, 97%, 98%, 99% or a range consisting of any of the above values. Optionally, the mass percentage content of the layered material with a molecular formula of $Li_aNi_bCo_cM1_dM2_eO_fA_g$ is 85% to 99%, 90% to 99%, 95% to 99%, 80% to 98%, 85% to 98%, 90% to 98%, 95% to 98%, 80% to 97%, 85% to 97%, 90% to 97% or 95% to 97%.

[Negative electrode plate]

The secondary battery of the present application further comprises a negative electrode plate. In some embodiments, the negative electrode plate comprises a negative electrode current collector and a negative electrode film layer located on the surface of the negative electrode current collector. For example, the negative electrode current collector has two opposite surfaces in the thickness direction thereof and the negative electrode film layer is located on either or both of the two opposite surfaces of the negative electrode current collector.

The negative electrode current collector may be a metal foil or a composite current collector. As an example of the metal foil, a copper foil may be used. The composite current collector may comprise a polymer material base layer and a metal material layer formed on at least one surface of the polymer material base layer. As an example, the metal material may include one or more of copper, a copper alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polystyrene ethylene (PE).

The negative electrode film layer typically comprises a negative electrode active material, an optional binder, an optional conductive agent and other optional additives. The negative electrode film layer is typically formed by coating a negative electrode slurry on the negative electrode current collector, followed by drying and cold pressing. The negative electrode slurry is typically formed by dispersing the negative electrode active material, an optional conductive agent, an optional binder, and other optional additives into a solvent and stirring uniformly. The solvent may be N-methylpyrrolidone (NMP) or deionized water, but is not limited thereto. As an example, the binder for the negative electrode film layer may include one or more of a styrene-butadiene rubber (SBR), a water-soluble unsaturated resin (SR-1B), a water-based acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS). As an example, the conductive agent for the negative electrode film layer may include one or more of superconductive carbon, acetylene black, carbon black, Ketjen black, carbon dots, carbon nanotubes, graphene, and carbon nanofibers. Other optional additives may include a thickening agent (e.g., sodium carboxymethyl cellulose CMC-Na), a PTC thermistor material, etc.

The negative electrode active material may be a negative electrode active material well known in the art for secondary batteries. As an example, the negative electrode active material may include one or more of natural graphite, artificial graphite, soft carbon, hard carbon, a silicon-based material, a tin-based material, and lithium titanate. The silicon-based material may include one or more of elemental silicon, a silicon oxide, a silicon carbon composite, a silicon nitrogen composite, and a silicon alloy material. The tin-based material may include one or more of elemental tin, a tin oxide, and a tin alloy material. The present application is not limited to these materials, and other well-known traditional materials that can be used as negative electrode active materials for secondary batteries may also be used. These negative electrode active materials may be used alone or as a combination of two or more.

[Separator]

The secondary battery of the present application may further comprise a separator. The separator is provided between the positive electrode plate and the negative electrode plate, and functions for isolation. The type of the separator is not particularly limited in the present application, and any well known porous-structured film with good chemical stability and mechanical stability may be selected and used.

In some embodiments, the material of the separator may include one or more of glass fibers, a non-woven, polyethylene, polypropylene, and polyvinylidene fluoride. The separator may be either a single-layer film or a multi-layer composite film. When the separator is a multi-layer composite film, the materials of the respective layers are the same or different.

In some embodiments, the positive electrode plate, the separator, and the negative electrode plate may be formed into an electrode assembly by a winding process and/or a stacking process.

In some examples, the secondary battery may may comprise an outer package. The outer package can be used to package the electrode assembly and electrolyte solution as described above. The outer package of the secondary battery may be a hard shell, for example, a hard plastic shell, an aluminum shell, a steel shell, etc. The outer package of the secondary battery may also be a soft bag, such as a pouch-type soft bag. The material of the soft bag may be plastics, such as one or more of polypropylene (PP), polybutylene terephthalate (PBT), polybutylene succinate (PBS), etc.

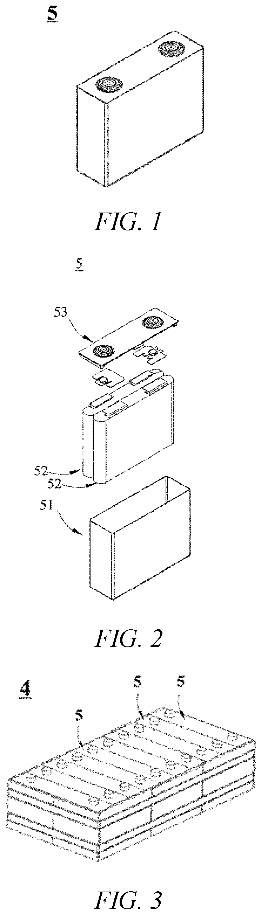

The shape of the secondary battery is not particularly limited in the present application and may be cylindrical, square or of any other shape. Fig. 1 shows a secondary battery 5 with a square structure as an example.

In some embodiments, as shown in Fig. 2, the outer package may comprise a housing 51 and a cover plate 53. The housing 51 may comprise a bottom plate and side plates connected to the bottom plate, and the bottom plate and the side plates are enclosed to form an accommodating cavity. The housing 51 has an opening in communication with the accommodating cavity, and the cover plate 53 is used for covering the opening to close the accommodating cavity. The positive electrode plate, the negative electrode plate, and the separator may be subjected to a winding process or a laminating process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and may be adjusted according to requirements.

In some embodiments of the present application, the secondary battery according to the present application may be assembled into a battery module, the number of the secondary batteries contained in the battery module may be multiple, and the specific number may be adjusted according to the application and capacity of the battery module.

Fig. 3 shows a schematic diagram of a battery module 4 as an example. As shown in Fig.3, in the battery module 4, a plurality of secondary batteries 5 may be arranged in sequence along the length direction of the battery module 4. Apparently, the secondary batteries may also be arranged in any other manner. Furthermore, the plurality of secondary batteries 5 may be fixed by fasteners.

Optionally, the battery module 4 may further comprise an outer shell with an accommodating space, and the plurality of secondary batteries 5 are accommodated in the accommodating space.

In some embodiments, the above battery module may also be assembled into a battery pack, and the number of the battery modules contained in the battery pack may be adjusted according to the application and capacity of the battery pack.

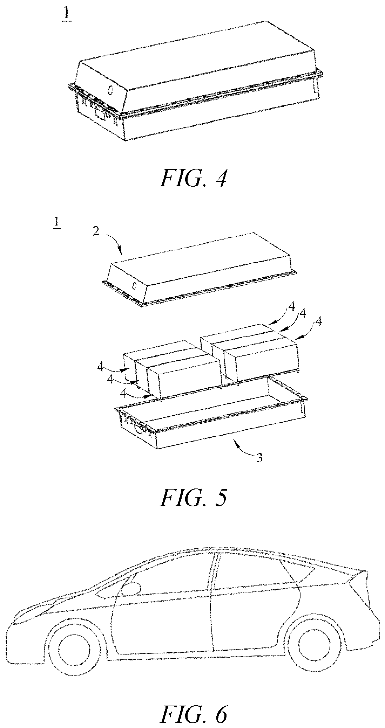

Figs. 4 and 5 show a schematic diagram of a battery pack 1 as an example. As shown in Figs. 4 and 5, the battery pack 1 may comprise a battery case and a plurality of battery modules 4 arranged in the battery case. The battery case comprises an upper case body 2 and a lower case body 3, and the upper case body 2 is used to cover the lower case body 3 to form a closed space for accommodating the battery modules 4. A plurality of battery modules 4 may be arranged in the battery case in any manner.

## Preparation method

An embodiment of the present application also provides a method for preparing a secondary battery, comprising at least the steps 1 and 2.

Step 1, assembling a positive electrode plate, a separator, a negative electrode plate and an electrolyte solution into a secondary battery, wherein the positive electrode plate comprises a positive electrode current collector and a positive electrode film layer located on the surface of the positive electrode current collector, the positive electrode film layer comprises a layered material with a molecular formula of $Li_aNi_bCo_cM1_dM2_eO_fA_g$, wherein M1 is selected from Mn, Al or a combination thereof, M2 is selected from one or more of Si, Ti, Mo, V, Ge, Se, Zr, Nb, Ru, Pd, Sb, Ce, Te and W, A is selected from one or more of F, N, P and S, $0.8 \leq a \leq 1.2$, $0 < b < 0.98$, $0 \leq c < 0.1$, $0 < d < 0.5$, $0 \leq e \leq 0.5$, $0 \leq f \leq 2$, $0 \leq g \leq 2$, $b + c + d + e = 1$, and $f + g = 2$, the electrolyte solution comprises lithium tetrafluoroborate, optional fluoroethylene carbonate, an optional lithium fluorosulfonimide salt and an optional lithium fluorosulfonate salt, and the mass percentage content of the lithium tetrafluoroborate in the electrolyte solution is x%, the mass percentage content of the fluoroethylene carbonate in the electrolyte solution is y1%, the mass percentage content of the lithium fluorosulfonimide salt in the electrolyte solution is y2%, and the mass percentage content of the lithium fluorosulfonate salt in the electrolyte solution is y3%, all based on the total mass of the electrolyte solution, and x > 0, y1 ≥ 0, y2 ≥ 0, and y3 ≥ 0, and step 2, screening out the secondary battery satisfying $0.05 \leq c + x/10 \leq 0.15$ from the secondary batteries obtained in step 1.

When the secondary battery satisfies x > 0 and $0.05 \leq c + x/10 \leq 0.15$, the crystal structure of the low-cobalt or cobalt-free positive electrode active material can be stabilized and the diffusion rate of the lithium ions therein can be increased. Therefore, the secondary batteries obtained by the preparation method of the present application all have significantly improved cycling performance and good storage performance and dynamic performance.

In some embodiments, the method further comprises a step of: screening out the secondary battery satisfying $0 < x \leq 1.0$ and $0.05 \leq c + x/10 \leq 0.15$ from the secondary batteries obtained in step 2. In this case, the prepared secondary battery has further improved cycling performance. Optionally, the secondary battery satisfies $0.05 \leq c + x/10 \leq 0.12$.

In some embodiments, the method further comprises a step of: screening out the secondary battery satisfying $25 \leq P/(c + x/10) \leq 65$ from the secondary batteries obtained in step 2, wherein P g/cm$^3$ represents the compacted density of the positive electrode plate. In this case, the prepared secondary battery may further have improved power performance in addition to significantly improved cycling performance and high energy density. Optionally, the secondary battery satisfies $30 \leq P/(c + x/10) \leq 50$.

In some embodiments, the method further comprises a step of: screening out the secondary battery satisfying at least one of the conditions (1) to (3) from the secondary batteries obtained in step 2:

(1)

$$0 < y1 \leq 2.5, 0.5 \leq y1/x \leq 4.0,$$

optionally, $0.5 \leq y1/x \leq 2.0$;
(2)

$$0 < y2 \leq 14, 1 \leq y2/x \leq 28;$$

and
(3)

$$0 < y3 \leq 1.0, 0.001 \leq y3/x \leq 2.0,$$

optionally $0.001 \leq y3/x \leq 1.0$.

In this case, the prepared secondary battery has at least one of further improved cycling performance, storage performance, rate performance, low-temperature performance and high-temperature performance.

In some embodiments, the method further comprises a step of: screening out the secondary battery satisfying $0 < y1 + y2 + y3 \leq 15$, $0 < y1 \leq 2.5$, $0 < y2 \leq 14$, $0 < y3 \leq 1.0$, $0.5 \leq y1/x \leq 4.0$, $1 \leq y2/x \leq 28$, $0.001 \leq y3/x \leq 2.0$ and $0.5 \leq y2/y1 \leq 48$ from the secondary batteries obtained in step 2. In this case, the overall performance of the prepared secondary battery is further improved.

Optionally, when $0 < b \leq 0.7$, the method further comprises a step of: screening out the secondary battery satisfying $0 < y1 + y2 + y3 \leq 15$, $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$ and $0.5 \leq y2/y1 \leq 10$ from the secondary batteries obtained in step 2.

Optionally, when $0.7 \leq b < 0.98$, the method further comprises a step of: screening out the secondary battery satisfying $0 < y1 + y2 + y3 \leq 15$, $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$ and $6 \leq y2/y1 \leq 48$ from the secondary batteries obtained in step 2.

In some embodiments, the method further comprises a step of: screening out the secondary battery satisfying $0 < y1 + y2 + y3 \leq 15$, $0 < y1 \leq 2.5$, $0 < y2 \leq 14$, $0 < y3 \leq 1.0$, $0.5 \leq y1/x \leq 4.0$, $1 \leq y2/x \leq 28$, $0.001 \leq y3/x \leq 2.0$, $0.5 \leq y2/y1 \leq 48$ and $0.036 \leq x/(y2 + y3) \leq 1.0$ from the secondary batteries obtained in step 2. In this case, the overall performance of the prepared secondary battery is further improved.

Optionally, when $0 < b \leq 0.7$, the method further comprises a step of: screening out the secondary battery satisfying $0 < y1 + y2 + y3 \leq 15$, $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$, $0.5 \leq y2/y1 \leq 10$ and $0.1 \leq x/(y2 + y3) \leq 1.0$ from the secondary batteries obtained in step 2.

Optionally, when $0.7 \leq b < 0.98$, the method further comprises a step of: screening out the secondary battery satisfying $0 < y1 + y2 + y3 \leq 15$, $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$, $6 \leq y2/y1 \leq 48$ and $0.036 \leq x/(y2 + y3) \leq 0.1$ from the secondary batteries obtained in step 2.

### Power consuming device

An embodiment of the present application further provides a power consuming device comprising at least one of a secondary battery, a battery module, or a battery pack of the present application. The secondary battery, the battery module or the battery pack may be used as a power supply of the power consuming device or as an energy storage unit of the power consuming device. The power consuming device may be, but is not limited to, a mobile device (e.g., a mobile phone, and a laptop computer), an electric vehicle (e.g., a pure electric vehicle, a hybrid electric vehicle, a plugin hybrid electric vehicle, an electric bicycle, an electric scooter, an electric golf cart, and an electric truck), an electric train, a ship and a satellite, an energy storage system, etc.

A secondary battery, battery module or battery pack may be used for the power consuming device according to the usage requirements thereof.

Fig. 6 shows a schematic diagram of a power consuming device as an example. The power consuming device may be a pure electric vehicle, a hybrid electric vehicle, a plug-in hybrid electric vehicle, etc. In order to meet the requirements of the power consuming device for a high power and a high energy density, a battery pack or battery module may be used.

As another example, the power consuming device may be a mobile phone, a tablet computer, a laptop computer, etc. The power consuming device is generally required to be thin and light, and may have a secondary battery used as a power supply.

### Examples

The following examples more specifically describe the content disclosed in the present application, and these examples are only used for explanatory description, because various modifications and transitions within the scope of the present disclosure are obvious to those skilled in the art. Unless otherwise stated, all the parts, percentages, and ratios reported in the following examples are on a wight basis, and all the reagents used in the examples are commercially available, obtained by synthesis through a conventional method, and used directly without further treatment, and the instruments used in the examples are commercially available.

### Example 1-1

#### Preparation of positive electrode plate

A positive electrode active material of $LiNi_{0.65}Co_{0.05}Mn_{0.3}O_2$, a conductive agent of carbon black, a binder of polyvinylidene fluoride (PVDF) were fully stirred and mixed in an appropriate amount of solvent of NMP in a mass ratio of 97.5 : 1.4 : 1.1, to form a uniform positive electrode slurry; and the positive electrode slurry was uniformly coated onto the surface of a positive electrode current collector of aluminum foil, followed by drying and cold pressing, to obtain a positive electrode plate. The positive electrode plate has a compacted density of $3.5 \ g/cm^3$.

#### Preparation of negative electrode plate

A negative electrode active material of graphite, a binder of a styrene-butadiene rubber (SBR), a thickening agent of sodium carboxymethyl cellulose (CMC-Na), and a conductive agent of carbon black (Super P) were fully stirred and mixed in an appropriate amount of solvent of deionized water in a mass ratio of 96.2 : 1.8 : 1.2 : 0.8, to form a uniform negative electrode slurry; and the negative electrode slurry was uniformly coated onto the surface of a negative electrode current collector of copper foil, followed by drying and cold pressing, to obtain a negative electrode plate.

#### Separator

A porous polyethylene (PE) film was used as a separator.

#### Preparation of electrolyte solution

Ethylene carbonate (EC), methyl ethyl carbonate (EMC) and diethyl carbonate (DEC) were mixed in a volume ratio of 1 : 1 : 1, to obtain an organic solvent. $LiPF_6$ and $LiBF_4$ were uniformly dissolved in the above organic solvent to obtain an electrolyte solution, and based on the total mass of the electrolyte solution, the mass percentage content of

$LiPF_6$ is 12.5%, and the mass percentage content of $LiBF_4$ is 0.1%.

<u>Preparation of secondary battery</u>

The positive electrode plate, the separator and the negative electrode plate were stacked in sequence and wound to obtain an electrode assembly; the electrode assembly was placed in an outer package, and the above electrolyte solution was added, followed by procedures such as packaging, standing, forming and aging, to obtain a secondary battery. The mass of the electrolyte solution is 15% of the total mass of the secondary battery.

**Examples 1-2 to 1-16 and comparative examples 1-1 to 1-7**

The preparation method of the secondary battery is similar to that of example 1, except that the type of the positive electrode active material and the preparation parameters of the electrolyte solution were adjusted, and the specific parameters are shown in table 1. "/" indicates that the corresponding components were not added to the electrolyte solution.

**Test part**

(1) Test of normal temperature cycling performance of secondary battery
At 25°C, the secondary battery was charged at a constant current of 1 C to 4.3 V and then charged at a constant voltage to a current of 0.05 C, the secondary battery was in a fully charged state at this moment, and the charge capacity at this moment was recorded, i.e., the charge capacity of the 1st cycle; and the secondary battery was left to stand for 5 min and then discharged at a constant current of 1 C to 2.8 V, which was regarded as a charge/discharge cycling process, and the discharge capacity at this moment was recorded, i.e., the discharge capacity of the 1st cycle. The secondary battery was subjected to a charge/discharge cycling test according to the above method, and the discharge capacity after each cycle was recorded. Capacity retention rate of secondary battery after cycling at 25°C for 600 cycles (%) = discharge capacity of the 600th cycle/discharge capacity of the 1st cycle $\times$ 100%.
(2) Test of high-temperature cycling performance of secondary battery
At 45°C, the secondary battery was charged at a constant current of 1 C to 4.3 V and then charged at a constant voltage to a current of 0.05 C, the secondary battery was in a fully charged state at this moment, and the charge capacity at this moment was recorded, i.e., the charge capacity of the 1st cycle; and the secondary battery was left to stand for 5 min and then discharged at a constant current of 1 C to 2.8 V, which was regarded as a charge/discharge cycling process, and the discharge capacity at this moment was recorded, i.e., the discharge capacity of the 1st cycle. The secondary battery was subjected to a charge/discharge cycling test according to the above method, and the discharge capacity after each cycle was recorded. Capacity retention rate of secondary battery after cycling at 45°C for 600 cycles (%) = discharge capacity of the 600th cycle/discharge capacity of the 1st cycle $\times$ 100%.
(3) Test of initial direct current internal resistance of secondary battery
At 25°C, the secondary battery was charged at a constant current of 1 C to 4.3 V and then charged at a constant voltage to a current of 0.05 C, and the secondary battery was in a fully charged state at this moment; the secondary battery was discharged at a constant current of 0.5 C and the secondary battery was adjusted to 50% SOC, and the voltage of the secondary battery at this moment was recorded as $U_1$; and the secondary battery was discharged at a constant current ($I_1$) of 4 C for 30 s, the sampling point was taken as 0.1 s, and the voltage at the end of the discharge was recorded as $U_2$. The discharge direct current internal resistance of the secondary battery at 50% SOC represents the initial direct current internal resistance of the secondary battery, and the initial direct current internal resistance (mQ) of the secondary battery = $(U_1 - U_2)/I_1$.
(4) Test of high-temperature storage performance of secondary battery
At 60°C, the secondary battery was charged at a constant current of 1 C to 4.3 V and then charged at a constant voltage to a current of 0.05 C, and then the volume of the secondary battery at this moment was measured by the displacement method and recorded as $V_0$; and the secondary battery was put into a incubator at 60°C and stored for 30 days before being taken out, and the volume of the secondary battery at this moment was measured by the displacement method and recorded as $V_1$. Expansion rate of volume of secondary battery after stored at 60°C for 30 days (%) = $[(V_1 - V_0)/V_0] \times 100\%$.
(5) Test of self-discharge rate of secondary battery
At 25°C, the secondary battery was charged to 70% SOC, and the open circuit voltage of the secondary battery at this moment was measured and recorded as OCV1; and the secondary battery was put into a incubator at 25°C and stored for 3 months before being taken out, and the open circuit voltage of the secondary battery was measured again and recorded as OCV2. The self-discharge rate of secondary battery stored at 25°C for 3 months = [(OCV1 - OCV2)/OCV1] × 100%. The lower the self-discharge rate of the secondary battery, the better the capacity performance and safety performance.

(6) Test of low-temperature performance of secondary battery

At -10°C, the secondary battery was charged at a constant current of 0.2 C to 4.3 V and then charged at a constant voltage to a current of 0.05 C, the secondary battery was in a fully charged state at this moment, and the charge capacity at this moment was recorded, i.e., the charge capacity of the 1st cycle; and the secondary battery was left to stand for 30 min and then discharged at a constant current of 0.2 C to 2.8 V, which was regarded as a charge/discharge cycling process, and the discharge capacity at this moment was recorded, i.e., the discharge capacity of the 1st cycle. The secondary battery was subjected to a charge/discharge cycling test according to the above method, and the discharge capacity after each cycle was recorded. Capacity retention rate of secondary battery after cycling at -10°C for 200 cycles (%) = discharge capacity of the 200th cycle/discharge capacity of the 1st cycle × 100%.

Table 1 presents the performance test results of examples 1-1 to 1-16 and comparative examples 1-1 to 1-7.

It can be seen from the test results in table 1 that when the electrolyte solution contains lithium tetrafluoroborate and the mass percentage content $x\%$ of lithium tetrafluoroborate and the content $c$ of the cobalt element in the low-cobalt or cobalt-free positive electrode active material satisfy $x > 0$ and $0.05 \leq c + x/10 \leq 0.15$, the secondary battery has significantly improved cycling performance, as well as good storage performance and dynamic performance. When the electrolyte solution does not contain lithium tetrafluoroborate, or the content of lithium tetrafluoroborate is too high or too low to satisfy $0.05 \leq c + x/10 \leq 0.15$, the cycling performance of the low-cobalt or cobalt-free secondary battery can not be effectively improved, and the internal resistance of the secondary battery is also high.

It can also be seen from the test results in table 1 that when the compacted density $P$ g/cm$^3$ of the positive electrode plate, the mass percentage content $x\%$ of lithium tetrafluoroborate, and the content $c$ of the cobalt element in the low-cobalt or cobalt-free positive electrode active material further satisfy $25 \leq P/(c + x/10) \leq 65$, the secondary battery may further have lower internal resistance.

The inventors further studied the influence of components in addition to lithium tetrafluoroborate in the electrolyte solution on the performance of the secondary battery.

The preparation methods of secondary batteries in examples 2-1 to 2-20 are similar to that in example 1-3, except that the preparation parameters of the electrolyte solution were adjusted, and the specific parameters are shown in table 2. "/" indicates that the corresponding components were not added to the electrolyte solution.

It can be seen from the test results in table 2 that when the electrolytes solution of examples 2-1 to 2-20 further contains one or more of fluoroethylene carbonate (FEC), lithium bisfluorosulfonimide (LiFSI) and lithium fluorosulfonate, it is beneficial to further improve the overall performance of the secondary battery.

Based on the test results of example 2-9 and examples 1-3, and 2-1 to 2-6, it can be seen that when fluoroethylene carbonate, lithium bisfluorosulfonimide and lithium fluorosulfonate are further added to the electrolyte solution of example 1-3, it is beneficial to obtain a secondary battery with better overall performance.

Based on the test results of examples 2-7 to 2-20, it can also be seen that by adjusting the mass percentage content $y1\%$ of fluoroethylene carbonate, the mass percentage content $y2\%$ of lithium bisfluorosulfonimide and the mass percentage content $y3\%$ of lithium fluorosulfonate to satisfy $0.5 \leq y1/x \leq 4.0$, $1 \leq y2/x \leq 28$, $0.001 \leq y3/x \leq 2.0$, $0.5 \leq y2/y1 \leq 48$ and $0.036 \leq x/(y2 + y3) \leq 1.0$, it is beneficial to obtain a secondary battery with better overall performance. The possible reason lies in that in this way, an inorganic/organic composite interfacial film with excellent performance can be formed on both the positive electrode and the negative electrode.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that may be conceived by those skilled in the art to the embodiments, and other modes constructed by combining some of the constituent elements of the embodiments also fall within the scope of the present application.

Table 1

| No. | Positive electrode active material | c | Content x of $LiBF_4$ (%) | c + x/10 | Compacted density P (g/cm³) | P/(c + x/10) | Capacity retention rate after cycling at 25°C for 600 cycles (%) | Capacity retention rate after cycling at 45°C for 600 cycles (%) | Initial direct current internal resistance (mΩ) | Expansion rate of volume after stored at 60°C for 30 days (%) | Self-discharge rate after stored at 25°C for 3 months (%) |
|---|---|---|---|---|---|---|---|---|---|---|---|
| Example 1-1 | $LiNi_{0.65}Co_{0.05}Mn_{0.3}O_2$ | 0.05 | 0.10 | 0.060 | 3.50 | 58.3 | 87.9 | 81.3 | 24.1 | 19.7 | 2.2 |
| Example 1-2 | $LiNi_{0.65}Co_{0.05}Mn_{0.3}O_2$ | 0.05 | 0.30 | 0.080 | 3.50 | 43.8 | 89.9 | 83.2 | 22.3 | 18.8 | 2.4 |
| Example 1-3 | $LiNi_{0.65}Co_{0.05}Mn_{0.3}O_2$ | 0.05 | 0.50 | 0.100 | 3.50 | 35.0 | 90.3 | 83.9 | 23.9 | 18.3 | 2.5 |
| Example 1-4 | $LiNi_{0.65}Co_{0.05}Mn_{0.3}O_2$ | 0.05 | 0.70 | 0.120 | 3.50 | 29.2 | 89.6 | 83.1 | 24.1 | 18.7 | 2.8 |
| Example 1-5 | $LiNi_{0.65}Co_{0.05}Mn_{0.3}O_2$ | 0.05 | 0.90 | 0.140 | 3.50 | 25.0 | 88.8 | 82.6 | 24.4 | 18.9 | 2.9 |
| Example 1-6 | $LiNi_{0.65}Co_{0.05}Mn_{0.3}O_2$ | 0.05 | 1.00 | 0.150 | 3.50 | 23.3 | 88.1 | 81.6 | 25.1 | 19.3 | 3.0 |
| Comparative example 1-1 | $LiNi_{0.65}Co_{0.05}Mn_{0.3}O_2$ | 0.05 | / | / | 3.50 | / | 75.9 | 69.5 | 28.8 | 22.3 | 5.1 |
| Comparative example 1-2 | $LiNi_{0.65}Co_{0.05}Mn_{0.3}O_2$ | 0.05 | 1.50 | 0.200 | 3.50 | 17.5 | 78.2 | 72.1 | 29.9 | 24.6 | 6.2 |
| Example 1-7 | $LiNi_{0.61}Co_{0.09}Mn_{0.3}O_2$ | 0.09 | 0.10 | 0.100 | 3.50 | 35.0 | 86.1 | 80.2 | 24.4 | 20.1 | 1.7 |
| Example 1-8 | $LiNi_{0.61}Co_{0.09}Mn_{0.3}O_2$ | 0.09 | 0.20 | 0.110 | 3.50 | 31.8 | 87.5 | 81.6 | 23.7 | 19.2 | 1.8 |
| Example 1-9 | $LiNi_{0.61}Co_{0.09}Mn_{0.3}O_2$ | 0.09 | 0.30 | 0.120 | 3.50 | 29.2 | 88.4 | 82.7 | 21.1 | 18.3 | 1.9 |
| Example 1-10 | $LiNi_{0.61}Co_{0.09}Mn_{0.3}O_2$ | 0.09 | 0.50 | 0.140 | 3.50 | 25.0 | 89.7 | 83.4 | 23.2 | 17.6 | 2.1 |
| Example 1-11 | $LiNi_{0.61}Co_{0.09}Mn_{0.3}O_2$ | 0.09 | 0.60 | 0.150 | 3.50 | 23.3 | 88.6 | 81.9 | 25.4 | 19.7 | 2.4 |
| Comparative example 1-3 | $LiNi_{0.61}Co_{0.09}Mn_{0.3}O_2$ | 0.09 | / | / | 3.50 | / | 80.3 | 73.9 | 27.5 | 24.2 | 5.2 |
| Comparative example 1-4 | $LiNi_{0.61}Co_{0.09}Mn_{0.3}O_2$ | 0.09 | 0.80 | 0.170 | 3.50 | 20.6 | 82.2 | 77.3 | 28.9 | 25.2 | 6.2 |
| Example 1-12 | $LiNi_{0.7}Mn_{0.3}O_2$ | 0 | 0.50 | 0.050 | 3.50 | 70.0 | 82.1 | 78.4 | 27.9 | 27.3 | 3.9 |

(continued)

| No. | Positive electrode active material | c | Content x of LiBF$_4$ (%) | c + x/10 | Compacted density P (g/cm$^3$) | P/(c + x/10) | Capacity retention rate after cycling at 25°C for 600 cycles (%) | Capacity retention rate after cycling at 45°C for 600 cycles (%) | Initial direct current internal resistance (mΩ) | Expansion rate of volume after stored at 60°C for 30 days (%) | Self-discharge rate after stored at 25°C for 3 months (%) |
|---|---|---|---|---|---|---|---|---|---|---|---|
| Example 1-13 | LiNi$_{0.7}$Mn$_{0.3}$O$_2$ | 0 | 0.70 | 0.070 | 3.50 | 50.0 | 83.3 | 79.1 | 27.1 | 26.1 | 3.8 |
| Example 1-14 | LiNi$_{0.7}$Mn$_{0.3}$O$_2$ | 0 | 0.90 | 0.090 | 3.50 | 38.9 | 84.1 | 80.1 | 26.6 | 25.5 | 3.4 |
| Example 1-15 | LiNi$_{0.7}$Mn$_{0.3}$O$_2$ | 0 | 1.00 | 0.100 | 3.50 | 35.0 | 83.6 | 79.5 | 27.3 | 26.8 | 3.7 |
| Example 1-16 | LiNi$_{0.7}$Mn$_{0.3}$O$_2$ | 0 | 1.20 | 0.120 | 3.50 | 29.2 | 82.6 | 78.5 | 27.8 | 28.1 | 4.1 |
| Comparative example 1-5 | LiNi$_{0.7}$Mn$_{0.3}$O$_2$ | 0 | / | / | 3.50 | / | 65.4 | 60.4 | 35.7 | 32.3 | 7.9 |
| Comparative example 1-6 | LiNi$_{0.7}$Mn$_{0.3}$O$_2$ | 0 | 0.20 | 0.020 | 3.50 | 175.0 | 69.9 | 64.5 | 31.7 | 29.9 | 7.5 |
| Comparative example 1-7 | LiNi$_{0.7}$Mn$_{0.3}$O$_2$ | 0 | 1.60 | 0.160 | 3.50 | 21.9 | 72.3 | 68.9 | 39.8 | 30.1 | 9.9 |

Table 2

| No. | Content x of LiBF$_4$ (%) | Content y1 of FEC (%) | Content y2 of LiFSI (%) | Content y3 of lithium fluorosulfonate (%) | y1/x | y2/x | y3/x | y2/y1 | x/(y2+y3) | Capacity retention rate after cycling at 25°C for 600 cycles (%) | Capacity retention rate after cycling at 45°C for 600 cycles (%) | Initial direct current internal resistance (mΩ) | Expansion rate of volume after stored at 60°C for 30 days (%) | Self-discharge rate after stored at 25°C for 3 months (%) | Capacity retention rate after cycling at -10°C for 200 cycles (%) |
|---|---|---|---|---|---|---|---|---|---|---|---|---|---|---|---|
| Example 1-3 | 0.50 | / | / | / | / | / | / | / | / | 90.3 | 83.9 | 23.9 | 18.3 | 2.5 | 62.5 |
| Example 2-1 | 0.50 | 0.80 | / | / | / | / | / | / | / | 91.5 | 84.5 | 24.1 | 18.7 | 2.1 | 61.7 |
| Example 2-2 | 0.50 | / | 2.5 | / | / | / | / | / | / | 91.3 | 84.6 | 22.4 | 16.9 | 2.2 | 63.7 |
| Example 2-3 | 0.50 | / | / | 0.02 | / | / | / | / | / | 90.1 | 84.4 | 23.1 | 17.2 | 2.3 | 63.5 |
| Example 2-4 | 0.50 | / | 2.5 | 0.02 | / | / | / | / | / | 90.9 | 84.7 | 23.3 | 17.2 | 2.4 | 64.1 |
| Example 2-5 | 0.50 | 0.80 | / | 0.02 | / | / | / | / | / | 91.0 | 84.1 | 23.7 | 18.1 | 2.4 | 61.9 |
| Example 2-6 | 0.50 | 0.80 | 2.5 | / | / | / | / | / | / | 91.2 | 84.4 | 21.1 | 18.3 | 2.2 | 65.1 |
| Example 2-7 | 0.50 | 0.25 | 2.5 | 0.02 | 0.50 | 5.0 | 0.04 | 10.0 | 0.198 | 91.5 | 86.4 | 22.8 | 17.9 | 2.2 | 64.3 |
| Example 2-8 | 0.50 | 0.50 | 2.5 | 0.02 | 1.00 | 5.0 | 0.04 | 5.0 | 0.198 | 92.1 | 88.7 | 21.6 | 18.3 | 2.1 | 67.1 |
| Example 2-9 | 0.50 | 0.80 | 2.5 | 0.02 | 1.60 | 5.0 | 0.04 | 3.13 | 0.198 | 93.2 | 89.9 | 20.4 | 18.4 | 2.0 | 68.5 |
| Example 2-10 | 0.50 | 1.50 | 2.5 | 0.02 | 3.00 | 5.0 | 0.04 | 1.67 | 0.198 | 91.9 | 88.2 | 21.4 | 18.9 | 2.1 | 67.2 |
| Example 2-11 | 0.50 | 2.00 | 2.5 | 0.02 | 4.00 | 5.0 | 0.04 | 1.25 | 0.198 | 91.2 | 87.3 | 22.5 | 19.2 | 2.2 | 66.3 |

| No. | Content x of LiBF$_4$ (%) | Content y1 of FEC (%) | Content y2 of LiFSI (%) | Content y3 of lithium fluorosulfonate (%) | yl/x | y2/x | y3/x | y2/yl | x/(y2 + y3) | Capacity retention rate after cycling at 25°C for 600 cycles (%) | Capacity retention rate after cycling at 45°C for 600 cycles (%) | Initial direct current in-ternal re-sistance (mΩ) | Expansion rate of volume after stored at 60°C for 30 days (%) | Self-discharge rate after stored at 25°C for 3 months (%) | Capacity retention rate after cycling at -10°C for 200 cycles (%) |
|---|---|---|---|---|---|---|---|---|---|---|---|---|---|---|---|
| Example 2-12 | 0.50 | 0.80 | 0.5 | 0.02 | 1.60 | 1.0 | 0.04 | 0.63 | 0.962 | 91.1 | 84.2 | 23.4 | 18.2 | 2.5 | 62.1 |
| Example 2-13 | 0.50 | 0.80 | 1.0 | 0.02 | 1.60 | 2.0 | 0.04 | 1.25 | 0.490 | 92.3 | 85.1 | 22.7 | 18.2 | 2.4 | 63.7 |
| Example 2-14 | 0.50 | 0.80 | 1.5 | 0.02 | 1.60 | 3.0 | 0.04 | 1.88 | 0.329 | 93.1 | 85.9 | 21.9 | 18.3 | 2.4 | 65.8 |
| Example 2-15 | 0.50 | 0.80 | 5.0 | 0.02 | 1.60 | 10.0 | 0.04 | 6.25 | 0.100 | 93.1 | 88.7 | 19.6 | 19.9 | 2.2 | 69.3 |
| Example 2-16 | 0.50 | 0.80 | 8.0 | 0.02 | 1.60 | 16.0 | 0.04 | 10.0 | 0.062 | 92.8 | 87.3 | 18.5 | 20.7 | 2.3 | 70.2 |
| Example 2-17 | 0.50 | 0.80 | 2.5 | 0.01 | 1.60 | 5.0 | 0.02 | 3.13 | 0.199 | 92.1 | 88.8 | 21.3 | 18.4 | 2.1 | 69.4 |
| Example 2-18 | 0.50 | 0.80 | 2.5 | 0.10 | 1.60 | 5.0 | 0.20 | 3.13 | 0.192 | 95.1 | 90.9 | 19.6 | 17.6 | 2.1 | 72.3 |
| Example 2-19 | 0.50 | 0.80 | 2.5 | 0.50 | 1.60 | 5.0 | 1.00 | 3.13 | 0.167 | 94.3 | 89.5 | 19.9 | 17.0 | 2.2 | 74.2 |
| Example 2-20 | 0.50 | 0.80 | 2.5 | 1.00 | 1.60 | 5.0 | 2.00 | 3.13 | 0.143 | 92.7 | 88.5 | 20.5 | 16.8 | 2.3 | 73.6 |

**Claims**

1. A secondary battery comprising an electrolyte solution and a positive electrode plate, wherein

   the positive electrode plate comprises a positive electrode current collector and a positive electrode film layer located on the surface of the positive electrode current collector, and the positive electrode film layer comprises a layered material with a molecular formula of $Li_aNi_bCo_cM1_dM2_eO_fA_g$, wherein M1 is selected from Mn, Al or a combination thereof, M2 is selected from one or more of Si, Ti, Mo, V, Ge, Se, Zr, Nb, Ru, Pd, Sb, Ce, Te and W, A is selected from one or more of F, N, P and S, $0.8 \leq a \leq 1.2$, $0 < b < 0.98$, $0 \leq c < 0.1$, $0 < d < 0.5$, $0 \leq e \leq 0.5$, $0 \leq f \leq 2$, $0 \leq g \leq 2$, $b + c + d + e = 1$, and $f + g = 2$; and
   the electrolyte solution comprises lithium tetrafluoroborate, and the mass percentage content of lithium tetrafluoroborate in the electrolyte solution is x%, based on the total mass of the electrolyte solution, and the secondary battery satisfies: $x > 0$ and $0.05 \leq c + x/10 \leq 0.15$.

2. The secondary battery according to claim 1, wherein

$$0.05 \leq c + x/10 \leq 0.12;$$

   and/or

$$0 < x \leq 1.0.$$

3. The secondary battery according to claim 1 or 2, wherein the positive electrode plate has a compacted density of $P$ g/cm$^3$, and the secondary battery satisfies: $25 \leq P/(c + x/10) \leq 65$, optionally

$$30 \leq P/(c + x/10) \leq 50,$$

   and optionally P is 3.3 to 3.6.

4. The secondary battery according to any one of claims 1-3, wherein the electrolyte solution further comprises one or more of fluoroethylene carbonate, a lithium fluorosulfonimide salt and a lithium fluorosulfonate salt, wherein the mass percentage content of the fluoroethylene carbonate in the electrolyte solution is y1%, the mass percentage content of the lithium fluorosulfonimide salt in the electrolyte solution is y2%, and the mass percentage content of the lithium fluorosulfonate salt in the electrolyte solution is y3%, all based on the total mass of the electrolyte solution, and the electrolyte solution satisfies: $y1 \geq 0$, $y2 \geq 0$, $y3 \geq 0$, and $0 < y1 + y2 + y3 \leq 15$.

5. The secondary battery according to claim 4, wherein

   the lithium fluorosulfonimide salt has a molecular formula of $LiN(SO_2R_1)(SO_2R_2)$, wherein $R_1$ and $R_2$ each independently represent F or $C_nF_{2n+1}$, and n is an integer of 1-10, and optionally, the lithium fluorosulfonimide salt includes lithium difluorosulfoimide, lithium bistrifluoromethanesulfonimide or a combination thereof; and/or
   the lithium fluorosulfonate salt has a molecular formula of $LiSO_3R_3$, wherein $R_3$ represents F, or a partially or fully fluorinated C1-C10 alkyl, and optionally the lithium fluorosulfonate salt includes lithium fluorosulfonate, lithium trifluoromethanesulfonate or a combination thereof.

6. The secondary battery according to claim 4 or 5, wherein the mass percentage content y1% of the fluoroethylene carbonate in the electrolyte solution satisfies:

   $0 < y1 \leq 2.5$, optionally $0 < y1 \leq 2.0$; and/or
   $0.5 \leq y1/x \leq 4.0$, optionally $0.5 \leq y1/x \leq 2.0$.

7. The secondary battery according to any one of claims 4-6, wherein the mass percentage content y2% of the lithium fluorosulfonimide salt in the electrolyte solution satisfies:

$$0 < y2 \leq 14;$$

and/or

$$1 \leq y2/x \leq 28.$$

8. The secondary battery according to claim 7, wherein

when $0 < b \leq 0.7$, the mass percentage content y2% of the lithium fluorosulfonimide salt in the electrolyte solution satisfies: $0 < y2 \leq 5$ and/or $1 \leq y2/x \leq 10$, optionally $0 < y2 \leq 2.5$, optionally $1 \leq$

$$y2/x \leq 5;$$

when $0.7 \leq b < 0.98$, the mass percentage content y2% of the lithium fluorosulfonimide salt in the electrolyte solution satisfies: $5 \leq y2 \leq 14$ and/or $10 \leq y2/x \leq 28$, optionally $8 \leq y2 \leq 14$, optionally

$$16 \leq y2/x \leq 28.$$

9. The secondary battery according to any one of claims 4-8, wherein the mass percentage content y3% of the lithium fluorosulfonate salt in the electrolyte solution satisfies:

$0 < y3 \leq 1.0$, optionally $0 < y3 \leq 0.5$; and/or
$0.001 \leq y3/x \leq 2.0$, optionally $0.001 \leq y3/x \leq 1.0$.

10. The secondary battery according to claim 4 or 5, wherein the electrolyte solution further comprises fluoroethylene carbonate, a lithium fluorosulfonimide salt and a lithium fluorosulfonate salt, and the electrolyte solution satisfies: $0 < y1 \leq 2.5$, $0 < y2 \leq 14$, $0 < y3 \leq 1.0$, $0.5 \leq y1/x \leq 4.0$, $1 \leq y2/x \leq 28$, $0.001 \leq y3/x \leq 2.0$ and $0.5 \leq y2/y1 \leq 48$,

optionally, when $0 < b \leq 0.7$, the electrolyte solution satisfies: $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$ and $0.5 \leq y2/y1 \leq 10$; and
optionally, when $0.7 \leq b < 0.98$, the electrolyte solution satisfies: $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$ and $6 \leq y2/y1 \leq 48$.

11. The secondary battery according to claim 4 or 5, wherein the electrolyte solution further comprises fluoroethylene carbonate, a lithium fluorosulfonimide salt and a lithium fluorosulfonate salt, and the electrolyte solution satisfies: $0 < y1 \leq 2.5$, $0 < y2 \leq 14$, $0 < y3 \leq 1.0$, $0.5 \leq y1/x \leq 4.0$, $1 \leq y2/x \leq 28$, $0.001 \leq y3/x \leq 2.0$, $0.5 \leq y2/y1 \leq 48$ and $0.036 \leq x/(y2 + y3) \leq 1.0$,

optionally, when $0 < b \leq 0.7$, the electrolyte solution satisfies: $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$, $0.5 \leq y2/y1 \leq 10$ and $0.1 \leq x/(y2 + y3) \leq 1.0$; and
optionally, when $0.7 \leq b < 0.98$, the electrolyte solution satisfies: $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$, $6 \leq y2/y1 \leq 48$ and $0.036 \leq x/(y2 + y3) \leq 0.1$.

12. The secondary battery according to any one of claims 1-11, wherein $0 < c < 0.1$.

13. The secondary battery according to any one of claims 1-11, wherein $c = 0$.

14. The secondary battery according to any one of claims 1-13, wherein the mass percentage content of the layered material with a molecular formula of $Li_aNi_bCo_cM1_dM2_eO_fA_g$ is 80% to 99%, optionally 85% to 99%, based on the total mass of the positive electrode film layer.

15. The secondary battery according to any one of claims 1-14, wherein the secondary battery further satisfies: the mass of the electrolyte solution is 10% to 20% of the total mass of the secondary battery.

16. A method for preparing a secondary battery, comprising the steps of:

step 1, assembling a positive electrode plate, a separator, a negative electrode plate and an electrolyte solution into a secondary battery, wherein
the positive electrode plate comprises a positive electrode current collector and a positive electrode film layer located on the surface of the positive electrode current collector, the positive electrode film layer comprises a layered material with a molecular formula of $Li_aNi_bCo_cM1_dM2_eO_fA_g$, wherein M1 is selected from Mn, Al or a combination thereof, M2 is selected from one or more of Si, Ti, Mo, V, Ge, Se, Zr, Nb, Ru, Pd, Sb, Ce, Te and W, A is selected from one or more of F, N, P and S, $0.8 \leq a \leq 1.2$, $0 < b < 0.98$, $0 \leq c < 0.1$, $0 < d < 0.5$, $0 \leq e \leq 0.5$, $0 \leq f \leq 2$, $0 \leq g \leq 2$, $b + c + d + e = 1$, and $f + g = 2$,
the electrolyte solution comprises lithium tetrafluoroborate, optional fluoroethylene carbonate, an optional lithium fluorosulfonimide salt and an optional lithium fluorosulfonate salt, and the mass percentage content of the lithium tetrafluoroborate in the electrolyte solution is x%, the mass percentage content of the fluoroethylene carbonate in the electrolyte solution is y1%, the mass percentage content of the lithium fluorosulfonimide salt in the electrolyte solution is y2%, and the mass percentage content of the lithium fluorosulfonate salt in the electrolyte solution is y3%, all based on the total mass of the electrolyte solution, and $x > 0$, $y1 \geq 0$, $y2 \geq 0$, and $y3 \geq 0$, and
step 2, screening out the secondary battery satisfying $0.05 \leq c + x/10 \leq 0.15$ from the secondary batteries obtained in step 1.

17. The method according to claim 16, further comprising a step of: screening out the secondary battery satisfying $0 < x \leq 1.0$ and $0.05 \leq c + x/10 \leq 0.15$ from the secondary batteries obtained in step 2.

18. The method according to claim 16, further comprising a step of: screening out the secondary battery satisfying $25 \leq P/(c + x/10) \leq 65$ from the secondary batteries obtained in step 2, wherein P $g/cm^3$ represents the compacted density of the positive electrode plate.

19. The method according to claim 16, further comprising a step of: screening out the secondary battery satisfying $0 < y1 + y2 + y3 \leq 15$, $0 < y1 \leq 2.5$, $0 < y2 \leq 14$, $0 < y3 \leq 1.0$, $0.5 \leq yl/x \leq 4.0$, $1 \leq y2/x \leq 28$, $0.001 \leq y3/x \leq 2.0$ and $0.5 \leq y2/y1 \leq 48$ from the secondary batteries obtained in step 2,

optionally, when $0 < b \leq 0.7$, further comprising a step of: screening out the secondary battery satisfying $0 < y1 + y2 + y3 \leq 15$, $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$ and $0.5 \leq y2/y1 \leq 10$ from the secondary batteries obtained in step 2;
optionally, when $0.7 \leq b < 0.98$, further comprising a step of: screening out the secondary battery satisfying $0 < y1 + y2 + y3 \leq 15$, $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$ and $6 \leq y2/y1 \leq 48$ from the secondary batteries obtained in step 2.

20. The method according to claim 16, further comprising a step of: screening out the secondary battery satisfying $0 < y1 + y2 + y3 \leq 15$, $0 < y1 \leq 2.5$, $0 < y2 \leq 14$, $0 < y3 \leq 1.0$, $0.5 \leq y1/x \leq 4.0$, $1 \leq y2/x \leq 28$, $0.001 \leq y3/x \leq 2.0$, $0.5 \leq y2/y1 \leq 48$ and $0.036 \leq x/(y2 + y3) \leq 1.0$ from the secondary batteries obtained in step 2,

optionally, when $0 < b \leq 0.7$, further comprising a step of: screening out the secondary battery satisfying $0 < y1 + y2 + y3 \leq 15$, $0 < y1 \leq 2.5$, $0 < y2 \leq 5$, $0 < y3 \leq 1.0$, $0.5 \leq y1/x \leq 4.0$, $1 \leq y2/x \leq 10$, $0.001 \leq y3/x \leq 2.0$, $0.5 \leq y2/y1 \leq 10$ and $0.1 \leq x/(y2+y3) \leq 1.0$ from the secondary batteries obtained in step 2;
optionally, when $0.7 \leq b < 0.98$, further comprising a step of: screening out the secondary battery satisfying $0 < y1 + y2 + y3 \leq 15$, $0 < y1 \leq 2.5$, $5 \leq y2 \leq 14$, $0 < y3 \leq 1.0$, $0.5 \leq y1/x \leq 4.0$, $10 \leq y2/x \leq 28$, $0.001 \leq y3/x \leq 2.0$, $6 \leq y2/y1 \leq 48$ and $0.036 \leq x/(y2 + y3) \leq 0.1$ from the secondary batteries obtained in step 2.

21. A battery module, comprising a secondary battery of any one of claims 1-15 or a secondary battery prepared by the method of any one of claims 16-20.

22. A battery pack, comprising one of a secondary battery of any one of claims 1-15 or a secondary battery prepared by the method of any one of claims 16-20, and a battery module of claim 21.

23. A power consuming device, comprising at least one of a secondary battery of any one of claims 1-15 or a secondary battery prepared by the method of any one of claims 16-20, a battery module of claim 21, and a battery pack of claim 22.

FIG. 1

FIG. 2

FIG. 3

FIG. 4

FIG. 5

FIG. 6

## INTERNATIONAL SEARCH REPORT

| International application No. |
|---|
| **PCT/CN2022/101117** |

**A. CLASSIFICATION OF SUBJECT MATTER**

H01M 10/052(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 电池, 正极, 正电极, 阴极, 电解液, 电解质, 四氟硼酸锂, 高镍, 富镍, 无钴, 低钴, LiBF4, electrolyte, positive, electrode, cathode, lithium tetrafluoroborate, high, rich, nickel, cobalt, free, low

**C. DOCUMENTS CONSIDERED TO BE RELEVANT**

| Category* | Citation of document, with indication, where appropriate, of the relevant passages | Relevant to claim No. |
|---|---|---|
| X | CN 111509298 A (SVOLT ENERGY TECHNOLOGY CO., LTD.) 07 August 2020 (2020-08-07) description, paragraphs 4-96 | 1-3, 13-17, 21-23 |
| Y | CN 111509298 A (SVOLT ENERGY TECHNOLOGY CO., LTD.) 07 August 2020 (2020-08-07) description, paragraphs 4-96 | 4-11, 18-20 |
| X | CN 113692668 A (LG ENERGY SOLUTION LTD.) 23 November 2021 (2021-11-23) description, paragraphs 99-149 | 1-4, 6, 12, 14-18 |
| Y | CN 113692668 A (LG ENERGY SOLUTION LTD.) 23 November 2021 (2021-11-23) description, paragraphs 99-149 | 5, 7-11, 19, 20 |
| Y | CN 111048840 A (LIVING POWER TECHNOLOGY (SHANGHAI) CO., LTD. et al.) 21 April 2020 (2020-04-21) description, paragraphs 5-25 | 4-11, 18-20 |
| Y | CN 104900916 A (GUANGZHOU TINCI MATERIALS TECHNOLOGY CO., LTD.) 09 September 2015 (2015-09-09) description, paragraphs 8-110 | 4, 5 |

✓ Further documents are listed in the continuation of Box C.   ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2022** | **19 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/101117**

**C.      DOCUMENTS CONSIDERED TO BE RELEVANT**

| Category* | Citation of document, with indication, where appropriate, of the relevant passages | Relevant to claim No. |
|---|---|---|
| A | CN 111342137 A (NINGDE AMPEREX TECHNOLOGY LTD.) 26 June 2020 (2020-06-26) entire document | 1-23 |
| A | US 2020203765 A1 (BOARD OF REGENTS, THE UNIVERSITY OF TEXAS SYSTEM) 25 June 2020 (2020-06-25) entire document | 1-23 |

Form PCT/ISA/210 (second sheet) (January 2015)

**INTERNATIONAL SEARCH REPORT**
**Information on patent family members**

International application No.

**PCT/CN2022/101117**

| Patent document cited in search report | | | Publication date (day/month/year) | Patent family member(s) | | | Publication date (day/month/year) |
|---|---|---|---|---|---|---|---|
| CN | 111509298 | A | 07 August 2020 | WO | 2021243953 | A1 | 09 December 2021 |
| CN | 113692668 | A | 23 November 2021 | KR | 20200074902 | A | 25 June 2020 |
| | | | | US | 2021328266 | A1 | 21 October 2021 |
| | | | | WO | 2020130575 | A1 | 25 June 2020 |
| | | | | EP | 3879617 | A1 | 15 September 2021 |
| CN | 111048840 | A | 21 April 2020 | None | | | |
| CN | 104900916 | A | 09 September 2015 | None | | | |
| CN | 111342137 | A | 26 June 2020 | None | | | |
| US | 2020203765 | A1 | 25 June 2020 | WO | 2018200631 | A1 | 01 November 2018 |

Form PCT/ISA/210 (patent family annex) (January 2015)